(19) Europäisches Patentamt

European Patent Office

Office européen des brevets

(11) **EP 4 622 369 A1**

(12) **EUROPEAN PATENT APPLICATION**
published in accordance with Art. 153(4) EPC

(43) Date of publication:
**24.09.2025 Bulletin 2025/39**

(21) Application number: **22968124.2**

(22) Date of filing: **13.12.2022**

(51) International Patent Classification (IPC):
**H04W 72/0446** (2023.01)   **H04W 28/18** (2009.01)

(52) Cooperative Patent Classification (CPC):
**H04W 28/18; H04W 72/0446**

(86) International application number:
**PCT/CN2022/138828**

(87) International publication number:
**WO 2024/124412 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **HU, Yuanzhou
  Shenzhen, Guangdong 518129 (CN)**
• **WANG, Fan
  Shenzhen, Guangdong 518129 (CN)**
• **TONG, Wen
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **SEQUENCE TRANSMISSION METHOD AND APPARATUS**

(57)    A sequence transmission method and an apparatus are disclosed, to improve flexibility of a sequence transmission manner. The method includes: A sending-end apparatus determines $N_1$ first sequences, where an $n'$th first sequence is determined based on an $n'$th first base sequence, $n' = 0, 1, ... , N_1 - 1$, and each first base sequence is a sequence in a GCP. The sending-end apparatus sequentially sends the $N_1$ first sequences, where an equal time interval exists between time domain positions of any two adjacent first sequences, and $N_1$ first base sequences are related to a prime factor of $N_1$, or $N_1$ first base sequences are predefined sequences; or at least an integer p and an integer q exist, and a time interval between a time domain position of a $p^{th}$ first sequence in the $N_1$ first sequences and a time domain position of an adjacent sequence of the $p^{th}$ first sequence is different from a time interval between a time domain position of a $q^{th}$ first sequence in the $N_1$ first sequences and a time domain position of an adjacent sequence of the $q^{th}$ first sequence, where p and q are greater than or equal to 0 and less than or equal to $N_1 - 1$.

Sending-end apparatus | Receiving-end apparatus

S401: Determine $N_1$ first sequences, where an $n'$th first sequence is determined based on an $n'$th first base sequence, and the first base sequence is a sequence in a GCP

S402: The sending-end apparatus sends the $N_1$ first sequences (where the $N_1$ first sequences are sent in time domain at an equal interval or at unequal intervals), and the receiving-end apparatus receives a first signal (a signal obtained through transmission of the $N_1$ first sequences)

S403: Process the first signal based on the $N_1$ first sequences or $N_1$ first base sequences

FIG. 4

**Description**

**TECHNICAL FIELD**

Embodiments of this application relate to the communication field, and in particular, to a sequence transmission method and an apparatus.

**BACKGROUND**

In a system such as downlink synchronization, random access, sensing, radar, or integrated sensing and communication, a location and/or a speed of a target object usually need/needs to be obtained or sensed (or detected).

Currently, a sending device may send a time domain signal generated based on a plurality of sequences (which may be referred to as a sequence train). After the time domain signal is received by a receiving device through transmission, the receiving device may perform detection based on the received signal. Alternatively, the time domain signal is reflected by a target to generate an echo signal, and the sending device may receive the echo signal, and perform detection based on the echo signal. For example, the receiving device or the sending device may calculate an ambiguity function corresponding to the received signal, and detect a location and/or a speed of a target object based on the ambiguity function.

However, currently, a manner of sending the plurality of sequences has some limitations, and cannot be flexibly adjusted.

**SUMMARY**

This application provides a sequence transmission method and an apparatus, to improve flexibility of a sequence transmission manner.

According to a first aspect, a sequence transmission method is provided. The method may be performed by a sending-end apparatus, may be performed by a component of the sending-end apparatus, for example, a processor, a chip, or a chip system of the sending-end apparatus, or may be implemented by a logical module or software that can implement all or a part of functions of the sending-end apparatus. The method includes:

determining $N_1$ first sequences, where an $n'^{th}$ first sequence in the $N_1$ first sequences is determined based on an $n'^{th}$ first base sequence in $N_1$ first base sequences, $n' = 0, 1, \ldots,$ or $N_1 - 1$, and each first base sequence is a sequence in a Golay complementary pair (GCP); and sequentially sending the $N_1$ first sequences, where an equal time interval exists between time domain positions of any two adjacent first sequences in the $N_1$ first sequences, and the $N_1$ first base sequences satisfy at least one of the following: the $N_1$ first base sequences are related to a prime factor of $N_1$, or the $N_1$ first base sequences are predefined sequences; or at least an integer p and an integer q exist, and a time interval between a time domain position of a $p^{th}$ first sequence in the $N_1$ first sequences and a time domain position of an adjacent sequence of the $p^{th}$ first sequence is different from a time interval between a time domain position of a $q^{th}$ first sequence in the $N_1$ first sequences and a time domain position of an adjacent sequence of the $q^{th}$ first sequence, where p and q are greater than or equal to 0 and less than or equal to $N_1 - 1$.

According to this solution, when the equal time interval exists between time domain positions of any two adjacent first sequences, it may be considered that the plurality of first sequences are sent at the equal interval. When the time interval between the $p^{th}$ first sequence and the adjacent sequence of the $p^{th}$ first sequence is different from the time interval between the $q^{th}$ first sequence and the adjacent sequence of the $q^{th}$ first sequence, it may be considered that the plurality of first sequences are sent at unequal intervals. In other words, the plurality of sequences may be sent in time domain at the equal interval or at the unequal intervals. Therefore, for different quantities $N_1$ of sequences and/or different combinations of first sequences, a time interval between time domain positions of the sequences may be flexibly adjusted, to adjust or optimize a low ambiguity zone of an ambiguity function of the plurality of sequences, and therefore improve detection performance. In other words, the solution of this application provides a degree of design freedom in a broader sense, so that flexibility of a sequence transmission manner can be improved, to improve the detection performance.

In a possible design, when at least the integer p and the integer q exist, a time domain position of each first sequence in the $N_1$ first sequences is related to the prime factor of $N_1$.

In some implementations, that a time domain position of each first sequence in the $N_1$ first sequences is related to the prime factor of $N_1$ includes: The time domain position of each first sequence in the $N_1$ first sequences is related to the prime factor of $N_1$ and an offset.

In a first type of possible designs of this implementation:

In a possible design, lengths of all the $N_1$ first sequences are the same. A ratio of a start time domain position of the $n^{th}$ first sequence in the $N_1$ first sequences to the length of the first sequence is an $n^{th}$ element in a first position relationship sequence, and the $n'^{th}$ element $I_1(n')$ in the first position relationship sequence satisfies:

$$I_1(n') = n' + \sum_{m=0}^{M-1} (b_m \times d_m)$$

where $b_m$ satisfies $n' = \sum_{m=0}^{M-1}(b_m \times \prod_{i=-1}^{m-1} a_i)$ , $a_{-1} = 1$ , and $b_m = 0, 1, ...,$ or $a_m - 1$ ; $N_1 = \prod_{m=0}^{M-1} a_m$ , $a_m$ is the prime factor of $N_1$, m = 0, 1, ..., M - 1, and M is a positive integer greater than 1; and $d_m$ is the offset, and $d_m$ is a real number greater than or equal to 0.

According to the possible design, a value of each element in the first position relationship sequence may be determined in a structured manner, to determine a start time domain position of each first sequence. For a specific value of $N_1$, compared with a manner of searching for start time domain positions of the $N_1$ first sequences through blind permutation and combination, the foregoing structured solution can reduce search complexity. This is because: In the foregoing structured solution, only values of a factor sequence $a$ and a sequence $d$ need to be searched for. All elements in the factor sequence $a$ are prime factors of $N_1$, and a quantity of elements in the sequence $d$ is a quantity of prime factors of $N_1$ and is small. Therefore, when a value of $N_1$ is determined, complexity of searching for the values of the factor sequence $a$ and the sequence $d$ is low.

In a possible design, sequentially sending the $N_1$ first sequences includes: sending the $n^{th}$ first sequence in the $N_1$ first sequences in an $n^{th}$ third time unit in $N_1$ consecutive third time units, where a length of each third time unit is greater than or equal to the length of the first sequence, and lengths of at least two third time units in the $N_1$ consecutive third time units are not equal.

According to the possible design, when the lengths of the at least two third time units in the $N_1$ consecutive third time units are not equal, the plurality of sequences may be sent in time domain at the unequal intervals. Therefore, the time interval between the time domain positions of the sequences may be flexibly adjusted, to adjust or optimize the low ambiguity zone of the ambiguity function of the plurality of sequences, and therefore improve the detection performance.

In a possible design, the $n'^{th}$ first sequence in the $N_1$ first sequences is mapped starting from a start position in the $n^{th}$ third time unit in the $N_1$ consecutive third time units.

In a possible design, when n' = 0, 1, ... , or $N_1$ - 2, a length of an (n' - 1)$^{th}$ third time unit in the $N_1$ consecutive third time units and the $n'^{th}$ element in the first position relationship sequence satisfy:

$$I_1(n') = \sum_{i=-1}^{n'-1} L_i^{unit} / L_1$$

where $L_i^{unit}$ represents a length of an $i^{th}$ third time unit, $L_{-1}^{unit} = 0$ , and $L_1$ represents the length of the first sequence. In addition, a ratio of a length of an $(N_1 - 1)^{th}$ third time unit to the length of the first sequence is a real number greater than or equal to 1.

The foregoing formula may also be understood as relationships between lengths of a 0$^{th}$ third time unit to the (n' - 1)$^{th}$ third time unit and the $n'^{th}$ element in the first position relationship sequence.

In a possible design, the ratio of the length of the $(N_1 - 1)^{th}$ third time unit to the length of the first sequence is a predefined ratio.

In a possible design, a ratio of a length of the $n'^{th}$ third time unit in the $N_1$ consecutive third time units to the length of the first sequence satisfies an $n'^{th}$ first ratio.

In a possible design, when n' = 0, 1, ..., or $N_1$ - 2, the first ratio and the $n'^{th}$ element in the first position relationship sequence satisfy:

$$I_1(n') = \sum_{i=-1}^{n'-1} W_1(i)$$

where $W_1(i)$ represents an $i^{th}$ first ratio, $I_1(n')$ represents the $n'^{th}$ element in the first position relationship sequence, and $W_1(-1) = 0$.

In a second type of possible designs of this implementation:

In a possible design, a time domain position of the $n'^{th}$ first sequence in the $N_1$ first sequences is an end time domain position of the $n'^{th}$ first sequence, and lengths of all the $N_1$ first sequences are the same. A ratio of the time domain position of the $n'^{th}$ first sequence in the $N_1$ first sequences to the length of the first sequence is an $n'^{th}$ element in a first position relationship sequence, and the $n'^{th}$ element $I_1(n')$ in the first position relationship sequence satisfies:

$$I_1(n') = 1 + n' + \sum_{m=0}^{M-1} (b_m \times d_m)$$

where $b_m$ satisfies $n' = \sum_{m=0}^{M-1}(b_m \times \prod_{i=-1}^{m-1} a_i)$, $a_{-1}=1$, and $b_m = 0,1, ...,$ or $a_m$ - 1; $N_1 = \prod_{m=0}^{M-1} a_m$, $a_m$ is the prime factor of $N_1$, m = 0, 1, ..., M - 1, and M is a positive integer greater than 1; and $d_m$ is the offset, and $d_m$ is a real number greater than or equal to 0.

According to the possible design, a value of each element in the first position relationship sequence may be determined in a structured manner, to determine an end time domain position of each first sequence. For a specific value of $N_1$, compared with a manner of searching for end time domain positions of the $N_1$ first sequences through blind permutation and combination, the foregoing structured solution can reduce search complexity. This is because: In the foregoing structured solution, only values of a factor sequence *a* and a sequence *d* need to be searched for. All elements in the factor sequence *a* are prime factors of $N_1$, and a quantity of elements in the sequence *d* is a quantity of prime factors of $N_1$ and is small. Therefore, when a value of $N_1$ is determined, complexity of searching for the values of the factor sequence *a* and the sequence *d* is low.

In a possible design, sequentially sending the $N_1$ first sequences includes: sending the $n'$th first sequence in the $N_1$ first sequences in an $n$th third time unit in $N_1$ consecutive third time units, where a length of each third time unit is greater than or equal to the length of the first sequence, and lengths of at least two third time units in the $N_1$ consecutive third time units are not equal.

In a possible design, the $n'$th first sequence in the $N_1$ first sequences is sequentially mapped to the $n'$th third time unit in the $N_1$ consecutive third time units, and an end time domain position of the $n'$th first sequence for mapping is equal to an end time domain position in the $n'$th third time unit.

In a possible design, a length of the $n'$th third time unit in the $N_1$ consecutive third time units and the $n'$th element in the first position relationship sequence satisfy:

$$I_1(n') = \frac{\sum_{i=0}^{n'} L_i^{unit}}{L_1}$$

where $L_i^{unit}$ represents a length of an $i$th third time unit, and $L_1$ represents the length of the first sequence.

The foregoing formula may also be understood as relationships between lengths of a 0th third time unit to the $n$th third time unit and the $n'$th element in the first position relationship sequence.

In a possible design, a ratio of the length of the $n'$th third time unit in the $N_1$ consecutive third time units to the length of the first sequence satisfies an $n'$th first ratio.

In a possible design, the first ratio and the $n'$th element in the first position relationship sequence satisfy:

$$I_1(n') = \sum_{i=0}^{n'} W_1(i)$$

where $W_1$ (i) represents an $i$th first ratio, and $I_1$ (n') represents the $n'$th element in the first position relationship sequence.

In a possible design, when $N_1$ is a fourth value, the $N_1$ first base sequences are related to the prime factor of $N_1$; or when $N_1$ is a fifth value, the $N_1$ first base sequences are the predefined sequences.

In a possible design, sequentially sending the $N_1$ first sequences includes: sequentially sending the $N_1$ first sequences in $N_1$ first time units in N consecutive time units, where N is a positive integer greater than or equal to $N_1$, lengths of all the $N_1$ first time units are equal, and the length of the first time unit is greater than or equal to the length of the first sequence.

According to the possible design, because the $N_1$ first sequences are sequentially sent in the $N_1$ first time units in the N consecutive time units, values of N and $N_1$ may be flexibly selected based on a detection requirement or a requirement for a range of the low ambiguity zone, and positions of the $N_1$ first time units in the N consecutive time units may be flexibly adjusted, to adjust or optimize the low ambiguity zone of the ambiguity function, and therefore improve the detection performance.

In a possible design, the method further includes: determining $N_2$ second sequences, where elements in each of the second sequences are the same, $N_2$ is a nonnegative integer, and $N = N_1 + N_2$; and the $N_2$ second sequences and the $N_1$ first sequences form N sequences, and indexes of the $N_1$ first sequences in the N sequences are the same as indexes of the $N_1$ first time units in the N consecutive time units.

In a possible design, N is a positive integer greater than $N_1$, a start sequence in the N sequences is a sequence in the $N_1$ first sequences, and an end sequence in the N sequences is a sequence in the $N_1$ first sequences.

According to the possible design, the values of N and $N_1$ may be flexibly selected based on the detection requirement or the requirement for the range of the low ambiguity zone, and positions of the $N_1$ first sequences in the N sequences may be flexibly adjusted, to adjust or optimize the low ambiguity zone of the ambiguity function, and therefore improve the detection performance.

In a possible design, N is a positive integer greater than $N_1$, and the $N_1$ first time units include a start time unit and an end time unit in the N consecutive time units.

In a possible design, N is a positive integer greater than $N_1$, a start sequence in the N sequences is a sequence in the $N_2$ second sequences, and/or an end sequence in the N sequences is a sequence in the $N_2$ second sequences.

In a possible design, N is a positive integer greater than $N_1$, and the $N_1$ first time units do not include a start time unit and/or an end time unit in the N consecutive time units.

According to the possible design, because the $N_1$ first time units are consecutive in the N consecutive time units, in a scenario in which a plurality of sending-end apparatuses simultaneously send a plurality of sequences, a start position of the $N_1$ first time units in the N consecutive time units may be flexibly configured, to control interference between the sequences sent by the plurality of sending-end apparatuses. For example, a start position of $N_1$ first time units corresponding to each sending-end apparatus may be staggered from one another to control the interference. Furthermore, a second time unit may be for sending another type of data instead of the first sequence. When the plurality of sending-end apparatuses need to simultaneously send the another type of data, interference between the another type of data may also be controlled by adjusting the start position of the $N_1$ first time units.

In a possible design, the lengths of the $N_1$ first time units are different from a length of a second time unit, and the second time unit is any time unit other than the $N_1$ first time units in the N consecutive time units.

According to the possible design, the length of the second time unit may be flexibly adjusted based on the detection requirement or the requirement for the range of the low ambiguity zone, to be specific, relative positions of the $N_1$ first time units may be flexibly adjusted, to adjust or optimize the low ambiguity zone of the ambiguity function, and therefore improve the detection performance.

According to a second aspect, a sequence processing method is provided. The method may be performed by a receiving-end apparatus, may be performed by a component of the receiving-end apparatus, for example, a processor, a chip, or a chip system of the receiving-end apparatus, or may be implemented by a logical module or software that can implement all or a part of functions of the receiving-end apparatus. The method includes: receiving a first signal, where the first signal is a signal obtained through transmission of $N_1$ first sequences, an $n$'th first sequence in the $N_1$ first sequences is determined based on an $n$'th first base sequence in $N_1$ first base sequences, n' = 0,1, ..., or $N_1$ - 1, and each first base sequence is a sequence in a Golay complementary pair GCP; and processing the first signal based on the $N_1$ first sequences or the $N_1$ first base sequences, where an equal time interval exists between time domain positions of any two adjacent first sequences in the $N_1$ first sequences, and the $N_1$ first base sequences satisfy at least one of the following: the $N_1$ first base sequences are related to a prime factor of $N_1$, or the $N_1$ first base sequences are predefined sequences; or at least an integer p and an integer q exist, and a time interval between a time domain position of a $p$th first sequence in the $N_1$ first sequences and a time domain position of an adjacent sequence of the $p$th first sequence is different from a time interval between a time domain position of a $q$th first sequence in the $N_1$ first sequences and a time domain position of an adjacent sequence of the $q$th first sequence, where p and q are greater than or equal to 0 and less than or equal to $N_1$ - 1.

For technical effects brought by the second aspect, refer to the technical effects brought by the first aspect. Details are not described herein again.

In a possible design, when at least the integer p and the integer q exist, a time domain position of each first sequence in the $N_1$ first sequences is related to the prime factor of $N_1$.

In a possible design, when at least the integer p and the integer q exist, the time domain position of each first sequence in the $N_1$ first sequences is related to the prime factor of $N_1$ and an offset.

In a possible design, a time domain position of the $n$'th first sequence in the $N_1$ first sequences is a start time domain position of the $n$th first sequence, and lengths of all the $N_1$ first sequences are the same. A ratio of the time domain position of the $n$th first sequence in the $N_1$ first sequences to the length of the first sequence is an $n$'th element in a first position relationship sequence, and the $n$th element $I_1(n')$ in the first position relationship sequence satisfies:

$$I_1(n') = n' + \sum_{m=0}^{M-1} (b_m \times d_m)$$

where $b_m$ satisfies $n' = \sum_{m=0}^{M-1}(b_m \times \prod_{i=-1}^{m-1} a_i)$, $a_{-1} = 1$, and $b_m = 0,1, ...,$ or $a_m$ - 1 ; $N_1 = \prod_{m=0}^{M-1} a_m$, $a_m$ is the prime factor of $N_1$, $m = 0,1, ... , M$ - 1, and M is a positive integer greater than 1; and $d_m$ is the offset, and $d_m$ is a real number greater than or equal to 0.

In a possible design, the $n^{th}$ first sequence in the $N_1$ first sequences is mapped to an $n^{th}$ third time unit in $N_1$ consecutive third time units, a length of each third time unit is greater than or equal to the length of the first sequence, and lengths of at least two third time units in the $N_1$ consecutive third time units are not equal.

In a possible design, the $n'^{th}$ first sequence in the $N_1$ first sequences is mapped starting from a start position in the $n^{th}$ third time unit in the $N_1$ consecutive third time units.

In a possible design, when $n' = 0,1, ...,$ or $N_1$ - 2, a length of an $(n' - 1)^{th}$ third time unit in the $N_1$ consecutive third time units and the $n'^{th}$ element in the first position relationship sequence satisfy:

$$I_1(n') = \sum_{i=-1}^{n'-1} L_i^{unit} / L_1$$

where $L_i^{unit}$ represents a length of an $i^{th}$ third time unit, $L_{-1}^{unit} = 0$, and $L_1$ represents the length of the first sequence. In addition, a ratio of a length of an $(N_1 - 1)^{th}$ third time unit to the length of the first sequence is a real number greater than or equal to 1.

In a possible design, the ratio of the length of the $(N_1 - 1)^{th}$ third time unit to the length of the first sequence is a predefined ratio.

In a possible design, a ratio of a length of the $n'^{th}$ third time unit in the $N_1$ consecutive third time units to the length of the first sequence satisfies an $n'^{th}$ first ratio.

In a possible design, when $n' = 0,1, ...,$ or $N_1$ - 2, the first ratio and the $n^{th}$ element in the first position relationship sequence satisfy:

$$I_1(n') = \sum_{i=-1}^{n'-1} W_1(i)$$

where $W_1(i)$ represents an $i^{th}$ first ratio, $I_1(n')$ represents the $n'^{th}$ element in the first position relationship sequence, and $W_1(-1) = 0$.

In a possible design, when $N_1$ is a fourth value, the $N_1$ first base sequences are related to the prime factor of $N_1$; or when $N_1$ is a fifth value, the $N_1$ first base sequences are the predefined sequences.

In a possible design, the $n'^{th}$ first sequence in the $N_1$ first sequences is mapped to $N_1$ first time units in N consecutive time units, lengths of all the $N_1$ first time units are equal, and the length of the first time unit is greater than or equal to the length of the first sequence.

In a possible design, N is a positive integer greater than $N_1$, and the $N_1$ first time units include a start time unit and an end time unit in the N consecutive time units.

In a possible design, the lengths of the $N_1$ first time units are different from a length of a second time unit, and the second time unit is any time unit other than the $N_1$ first time units in the N consecutive time units.

In a possible design, N is a positive integer greater than $N_1$, a start sequence in N sequences is a sequence in $N_2$ second sequences, and/or an end sequence in the N sequences is a sequence in the $N_2$ second sequences.

In a possible design, N is a positive integer greater than $N_1$, and the $N_1$ first time units do not include a start time unit and/or an end time unit in the N consecutive time units.

With reference to the first aspect or the second aspect, in a possible design, the $N_1$ first base sequences correspond to a first extension sequence. When an $n'^{th}$ element in the first extension sequence is a first value, the $n^{th}$ first base sequence in the $N_1$ first base sequences is a sequence x in the GCP; or when an $n^{th}$ element in the first extension sequence is a second value, the $n'^{th}$ first base sequence in the $N_1$ first base sequences is a sequence y in the GCP.

With reference to the first aspect or the second aspect, in a possible design, the $n'^{th}$ element in the first extension sequence is related to $\prod_{m=0}^{M-1}(c_m)^{b_m}$, and $b_m$ satisfies $n' = \sum_{m=0}^{M-1}(b_m \times \prod_{i=-1}^{m-1} a_i)$; and $a_{-1} = 1$, $b_m = 0,1, ... , a_m$ - 1, $N_1 = \prod_{m=0}^{M-1} a_m$, $a_m$ is the prime factor of $N_1$, m = 0,1, ... , $M$ - 1, M is a positive integer greater than 1, and $c_m$ is equal to 1 or -1.

With reference to the first aspect or the second aspect, in a possible design, the $n'^{th}$ element in the first extension sequence satisfies at least one of the following:

$$s_{ext,1}(n') = \prod_{m=0}^{M-1}(c_m)^{b_m}$$

$$s_{ext,1}(n') = \frac{1}{2} - \frac{1}{2}\prod_{m=0}^{M-1}(c_m)^{b_m}$$

where $s_{ext,1}(n')$ represents the $n'$th element in the first extension sequence.

With reference to the first aspect or the second aspect, in a possible design, the $n'$th first sequence and the $n'$th first base sequence satisfy one of the following: the $n'$th first sequence is the same as the $n'$th first base sequence; the $n'$th first sequence is formed by concatenating the $n'$th first base sequence and at least one 0; the $n'$th first sequence is obtained by performing cyclic extension on the $n'$th first base sequence; or the $n'$th first sequence is formed by concatenating at least one 0 and a result obtained by performing cyclic extension on the $n'$th first base sequence.

With reference to the first aspect or the second aspect, in a possible design, when the $n'$th first sequence is obtained by performing cyclic extension on the $n'$th first base sequence:

$$s_{tx,1}^{n'}(i) = s_{base,1}^{n'}\left[(i + \Delta) \, mod \, L_{base,1}\right],$$

where i = 0,1, ... , or $L_1$ - 1

where $s_{tx,1}^{n'}(i)$ represents an $i^{th}$ element in the $n'$th first sequence, $s_{base,1}^{n'}$ represents an $i^{th}$ element in the $n'$th first base sequence, $\Delta$ represents an offset of the cyclic extension, mod represents a modulo operation, $L_{base,1}$ is a length of the first base sequence, and $L_1$ is the length of the first sequence.

According to a third aspect, a communication apparatus is provided, to implement the foregoing methods. The communication apparatus may be the sending-end apparatus in the first aspect or an apparatus, for example, a chip, included in the sending-end apparatus. Alternatively, the communication apparatus may be the receiving-end apparatus in the second aspect or an apparatus, for example, a chip, included in the receiving-end apparatus.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may include a sending module and a receiving module that are respectively configured to implement a sending function and a receiving function in any one of the foregoing aspects and the possible designs of the foregoing aspects. The processing module may be configured to implement a processing function in any one of the foregoing aspects and the possible designs of the foregoing aspects.

According to a fourth aspect, a communication apparatus is provided, including at least one processor, where the processor is configured to enable, by executing computer instructions stored in a memory or by using a logic circuit, the communication apparatus to perform the method in any one of the foregoing aspects. The communication apparatus may be the sending-end apparatus in the first aspect or an apparatus, for example, a chip, included in the sending-end apparatus. Alternatively, the communication apparatus may be the receiving-end apparatus in the second aspect or an apparatus, for example, a chip, included in the receiving-end apparatus.

In some possible designs, the communication apparatus further includes the memory, configured to store the computer instructions and/or a configuration file of the logic circuit. Optionally, the memory and the processor are integrated together, or the memory is independent of the processor.

According to a fifth aspect, a communication apparatus is provided, including a processor and a communication interface. The communication interface is configured to input and/or output a signal. The processor is configured to execute a computer program or instructions, to enable the communication apparatus to perform the method in any one of the foregoing aspects. The communication apparatus may be the sending-end apparatus in the first aspect or an apparatus, for example, a chip, included in the sending-end apparatus. Alternatively, the communication apparatus may be the receiving-end apparatus in the second aspect or an apparatus, for example, a chip, included in the receiving-end apparatus.

In some possible designs, the communication interface is an interface circuit, and is configured to read and write computer instructions. For example, the interface circuit is configured to receive computer-executable instructions (where the computer-executable instructions are stored in a memory, and may be directly read from the memory, or may be read via another component), and transmit the computer-executable instructions to the processor.

In some possible designs, the communication interface is configured to communicate with a module outside the communication apparatus.

In some possible designs, the communication apparatus may be a chip or a chip system. When the apparatus is the chip system, the chip system may include a chip, or may include a chip and another discrete component.

According to a sixth aspect, a communication apparatus is provided, including a logic circuit and an interface circuit. The interface circuit is configured to input and/or output information. The logic circuit is configured to perform the method in any one of the foregoing aspects, and perform processing and/or generate the to-be-output information based on the input information. The communication apparatus may be the sending-end apparatus in the first aspect or an apparatus, for example, a chip, included in the sending-end apparatus. Alternatively, the communication apparatus may be the receiving-end apparatus in the second aspect or an apparatus, for example, a chip, included in the receiving-end apparatus.

According to a seventh aspect, a computer-readable storage medium is provided. The computer-readable storage medium stores a computer program or instructions; and when the computer program or the instructions are executed by a processor, the method in any one of the foregoing aspects is implemented.

According to an eighth aspect, a computer program product is provided. When the computer program product is executed by a processor, the method in any one of the foregoing aspects is performed.

It may be understood that when the communication apparatus provided in any one of the third aspect to the eighth aspect is a chip, the foregoing sending action/function may be understood as outputting information, and the foregoing receiving action/function may be understood as inputting information.

For technical effects brought by any design scheme of the third aspect to the eighth aspect, refer to the technical effects brought by different design schemes of the first aspect or the second aspect. Details are not described herein again.

According to a ninth aspect, a communication system is provided. The communication system includes the sending-end apparatus in the first aspect and the receiving-end apparatus in the second aspect.

## BRIEF DESCRIPTION OF DRAWINGS

FIG. 1a is a diagram of relative positions of sequences according to this application;

FIG. 1b is a simulation diagram of a spectral function corresponding to a Prouhet-Thue-Morse PTM sequence according to this application;

FIG. 1c is a simulation diagram of a spectral function of an extension sequence corresponding to Golay complementary pair GCP repeated sequences according to this application;

FIG. 2 is a diagram of a structure of a communication system according to this application;

FIG. 3 is a diagram of a structure of a communication apparatus according to this application;

FIG. 4 is a diagram of interaction in a sequence transmission method according to this application;

FIG. 5 is a diagram of a time domain position of a first sequence according to this application;

FIG. 6 is a diagram of a position of a first sequence in a third time unit according to this application;

FIG. 7 is another diagram of a position of a first sequence in a third time unit according to this application;

FIG. 8a is a diagram of a length relationship between a first time unit and a second time unit according to this application;

FIG. 8b is another diagram of a length relationship between a first time unit and a second time unit according to this application;

FIG. 8c is a simulation diagram of a spectral function corresponding to a first extension sequence according to this application;

FIG. 9 is a diagram of a structure of a sending-end apparatus according to this application;

FIG. 10 is a diagram of a structure of a receiving-end apparatus according to this application; and

FIG. 11 is a diagram of another structure of a communication apparatus according to this application.

**DESCRIPTION OF EMBODIMENTS**

In descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and do not indicate a definite difference either.

In embodiments of this application, the word "example" or "for example" represents giving an example, an illustration, or a description. Any embodiment or design scheme described as an "example" or "for example" in embodiments of this application should not be explained as being more preferred or having more advantages than other embodiments or design schemes. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean an execution sequence in various embodiments of this application. The execution sequence of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described herein.

In this application, unless otherwise specified, for same or similar parts in embodiments, refer to each other. In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

For case of understanding of the technical solutions in embodiments of this application, related technologies of this application are first briefly described below.

(1) A correlation (correlation) operation: The correlation operation is a processing process performed between two sequences, and includes multiplication and addition operations performed between different elements in the two sequences. The correlation operation may include a periodic correlation operation or an aperiodic correlation operation.

(2) Autocorrelation: If two sequences are the same, a correlation operation performed between the two sequences is referred to as an autocorrelation (or an autocorrelation operation).

(3) Cross-correlation: If two sequences are different, a correlation operation performed between the two sequences is referred to as a cross-correlation (or a cross-correlation operation).

(4) Aperiodic autocorrelation: When a sequence autocorrelation is calculated, a correlation value of overlapping elements of two sequences is calculated by using a relative displacement between the sequences.

If the sequences have a length of L, there may be a total of 2L-1 cases of the relative displacement between the sequences: -L+1, -L+2, ..., -1, 0, 1, ..., L-2, and L-1. Therefore, there are a total of 2L-1 results of the aperiodic autocorrelation operation.

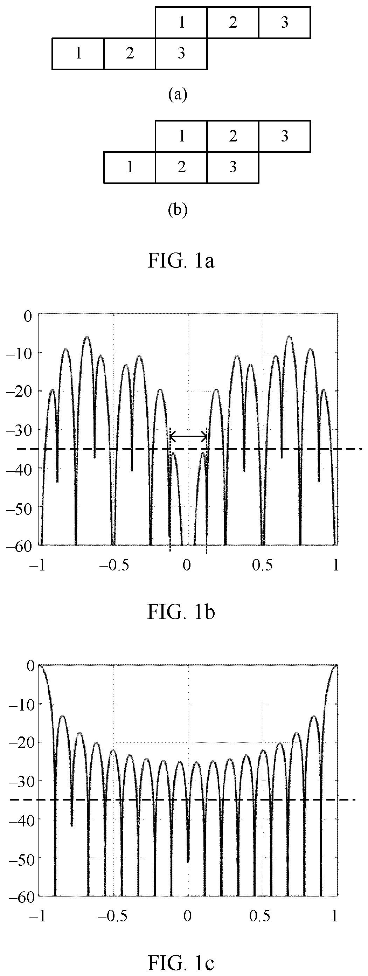

For example, for sequences [1, 2, 3], when a relative displacement between the sequences is -2, relative positions of the sequences may be shown in (a) in FIG. 1a. In this case, an aperiodic autocorrelation result is $1 \times 3 = 3$.

When a relative displacement between the sequences is -1, relative positions of the sequences may be shown in (b) in FIG. 1a. In this case, an aperiodic autocorrelation result is $1 \times 2 + 2 \times 3 = 8$. By analogy, when relative displacements between the sequences are respectively -2, -1, 0, 1, and 2, aperiodic autocorrelation results of the sequences are sequentially 3, 8, 14, 8, and 3.

Optionally, there may alternatively be a total of L cases of the relative displacement in the aperiodic autocorrelation operation: 0, 1, ..., L-2, and L-1. For example, when an aperiodic autocorrelation operation is performed on sequences $q_1$ with a length of L, a $k^{th}$ value (namely, a value obtained when a relative displacement is k) obtained through the aperiodic autocorrelation operation may be represented as $\sum_{i=0}^{L-k-1} q_1(i) q_1(i+k)$, where $k = 0, 1, ...,$ or $L - 1$.

It may be understood that a processing process of an aperiodic cross-correlation operation is similar to that of the aperiodic autocorrelation operation.

(5) Golay complementary pair (Golay complementary pair, GCP):

The GCP may also be referred to as a Golay complementary pair, Golay complementary sequences, or GCP sequences, and is a type of perfect aperiodic autocorrelation sequences. The GCP is defined as follows: For a pair of sequences $x$ and $y$ with a code length of $L$, if a sum of aperiodic autocorrelation functions (aperiodic autocorrelation functions, AACFs) of the sequences is 0 for all displacements except 0, the two sequences are a GCP. The AACF of the sequence $x = [x(0), x(1), ..., x(L - 1)]$ may be defined as:

$$C_x(k) = \sum_{n=0}^{L-1-k} x(n)x(n+k), \text{where } 0 \leq k \leq L-1$$

$k$ represents the displacement; and when $k$ is equal to 0, it indicates that the displacement is 0. The AACF (represented as $C_y(k)$) of the sequence $y$ is similar to the AACF of the sequence $x$. For details, refer to the descriptions of $C_x(k)$, and the details are not described herein again.

For example, for sequences $x = [1, 1, 1, -1]$ and $y = [1, 1, -1, 1]$, because an AACF of the sequence $x$ is $C_x = [4, 1, 0, -1]$, $k = 0, ...,$ or 3, an AACF of the sequence y is $C_y = [4, -1, 0, 1]$, $k = 0, ...,$ or 3, and $C_x + C_y = [8, 0, 0, 0]$, the sequences $x$ and $y$ are a GCP.

(6) Ambiguity function (ambiguity function):

The ambiguity function may be for measuring impact of a Doppler shift and a transmission delay on a sent signal. The Doppler shift is caused by movement of a target object, and may be approximately equivalent to continuous phase rotation of a continuous time domain signal that is sent by a sending end.

In a scenario in which a plurality of sequences need to be sent, a sending end may sequentially generate, based on the plurality of sequences, continuous time domain signals that are to carry the plurality of sequences, and send the signals. A continuous time domain signal that is received by a receiving end may be affected by a Doppler shift. Therefore, the receiving end may measure, by using an ambiguity function, impact of the Doppler shift on the sent signals (or the plurality of sent sequences).

Sending a plurality of sequences may cause an ambiguity function of the plurality of sequences to generate a low ambiguity zone (low ambiguity zone). The low ambiguity zone of the ambiguity function may be determined based on a threshold. In the low ambiguity zone of the ambiguity function, values of the ambiguity function are all less than or equal to the threshold. In other words, the low ambiguity zone of the ambiguity function is a zone in which a value of the ambiguity function is less than or equal to a specific threshold.

The low ambiguity zone enables a receiver to detect a location and/or a speed of the target object more accurately. In addition, in the low ambiguity zone, a plurality of target objects may be more accurately distinguished, and locations and/or speeds of the target objects are separately detected. Generally, a larger range of the low ambiguity zone indicates a larger speed range that can be detected and more target objects that can be distinguished in a specific speed range.

(7) Time unit (time unit):

In embodiments of this application, the time unit may be a consecutive period of time or a segment of consecutive time domain resources. A time domain signal may be converted into a frequency domain signal through a Fourier transform, in other words, a time domain signal sent on a segment of time domain resources may be converted into a frequency domain signal. Therefore, this may also mean: A segment of consecutive time domain resources corresponds to a segment of frequency domain resources. Further, the time domain resources and the frequency domain resources corresponding to the time domain resources may be collectively referred to as time-frequency resources.

Optionally, one time unit may include at least one symbol. The symbol may be a single-carrier (single-carrier) symbol, a single-carrier quadrature amplitude modulation (single-carrier quadrature amplitude modulation, SC-QAM) symbol, or a single-carrier frequency division multiple access (single-carrier frequency division multiple access, SC-FDMA) symbol.

Optionally, duration (or referred to as a time length) of one time unit may be represented as $L_{unit} \times P \times T_s$. $T_s$ represents a time unit (or referred to as a sampling interval). $T_s$ may be determined based on a subcarrier spacing. For example, when the subcarrier spacing is 15 kilohertz (kHz), $T_s$ may be $1/(2048 \times 15000)$ second (s). $P$ is a positive integer. For example, $P$ may be 1 or 2. For example, $P$ may be understood as an upsampling multiple.

$L_{unit}$ may be understood as a quantity of discrete points (or referred to as sampling points) in the time unit, and a time interval between any two adjacent discrete points is $P \times T_s$. In other words, $L_{unit}$ discrete points (or discrete time domain positions) may be obtained by dividing (or sampling) the time unit at an interval of $P \times T_s$.

Optionally, a value of $L_{unit}$ may be greater than or equal to a length of a sequence to be sent in the time unit.

In addition, $L_{unit}$ may also be referred to as a length of the time unit. In other words, in embodiments of this application, the duration of the time unit may be a continuous time length, and the length of the time unit may be the quantity of discrete points. That the length of the time unit is $L_{unit}$ may also be understood as: $L_{unit}$ discrete values may be sent in the time unit.

Optionally, when a length of a time unit is $L_{unit}$, the time unit may include $L_{unit}$ single-carrier symbols or $L_{unit}$ SC-QAM symbols. One value (for example, one complex value) may be sent on each single-carrier symbol or each SC-QAM symbol. Duration of each single-carrier symbol or each SC-QAM symbol is $P \times T_s$.

Optionally, when a length of a time unit is $L_{unit}$, the time unit may include at least one SC-FDMA symbol.

In embodiments of this application, there are three types of time units, namely, a first time unit, a second time unit, and a third time unit, and the time units are described in detail in the following embodiment. Details are not described herein.

Each of a plurality of sequences sent by a sending end may be a sequence x or a sequence y in a GCP. In some possible implementations, whether a specific sequence is the sequence x or the sequence y may be determined in the following two manners:

Manner 1: Perform determining based on a Prouhet-Thue-Morse (Prouhet-Thue-Morse, PTM) sequence:

The PTM sequence is a binary sequence, to be specific, a value of each element in the PTM sequence is 1 or -1, or is 0 or 1.

When the plurality of to-be-sent sequences are determined based on the PTM sequence, the PTM sequence is an extension sequence corresponding to the plurality of sequences. N elements in the PTM sequence one-to-one correspond to N sequences. The quantity N of sequences is a power of 2, in other words, $N = 2^M$, where M is a positive integer.

For example, a definition may be: When a value of an element in the PTM sequence is 1, a corresponding sequence is the sequence x in the GCP; and correspondingly, when a value of an element in the PTM sequence is -1, a corresponding sequence is the sequence y in the GCP. Alternatively, a definition may be: When a value of an element in the PTM sequence is 0, a corresponding sequence is the sequence x in the GCP; and correspondingly, when a value of an element in the PTM sequence is 1, a corresponding sequence is the sequence y in the GCP.

For example, a PTM sequence with M being 4 and N being 16 is [1, -1, -1, 1, -1, 1, 1, -1, -1, 1, 1, -1, 1, -1, -1, 1] or [0, 1, 1, 0, 1, 0, 0, 1, 1, 0, 0, 1, 0, 1, 1, 0]. In this case, 16 corresponding sequences that are to be sent should be [x, y, y, x, y, x, x, y, y, x, x, y, x, y, y, x].

It should be noted that, in embodiments of this application, unless otherwise specified, x represents the sequence x in the GCP, and y represents the sequence y in the GCP. Unified descriptions are provided herein, and details are not described in the following embodiment again.

Manner 2: Perform determining through GCP repetition:

In this manner, the sequence x and the sequence y in the GCP may be repeated to obtain N sequences. For example, when N=16, 16 corresponding sequences may be [x, y, x, y, x, y, x, y, x, y, x, y, x, y, x, y]. When N=15, 15 corresponding sequences may be [x, y, x, y, x, y, x, y, x, y, x, y, x, y, x].

In analogy with the manner 1, an extension sequence may also be defined in the manner 2. When an element in the extension sequence is 1 (or 0), a corresponding sequence is the sequence x in the GCP; and when an element in the extension sequence is -1 (or 1), a corresponding sequence is the sequence y in the GCP.

For example, when N=16, a corresponding extension sequence may be [1, -1, 1, -1, 1, -1, 1, -1, 1, -1, 1, -1, 1, -1, 1, -1] or [0, 1, 0, 1, 0, 1, 0, 1, 0, 1, 0, 1, 0, 1, 0, 1]. When N = 15, a corresponding extension sequence may be [1, -1, 1, -1, 1, -1, 1, -1, 1, -1, 1, -1, 1, -1, 1] or [0, 1, 0, 1, 0, 1, 0, 1, 0, 1, 0, 1, 0, 1, 0].

Generally, after determining the N to-be-sent sequences in the foregoing manner 1 or manner 2, the sending end sends the N sequences in N consecutive time units with equal duration. In this case, an ambiguity function A may be approximately represented as the following formula (1-A):

$$A(\tau, v) \approx \frac{1}{2}\left[C_x(\tau) + C_y(\tau)\right]\sum_{n=0}^{N-1} e^{j2\pi vn/N} + \frac{1}{2}\left[C_x(\tau) - C_y(\tau)\right]\sum_{n=0}^{N-1} s_{ext}(n)e^{j2\pi vn/N} \quad (1\text{-}A)$$

$\tau$ is a time domain (or delay domain) discrete index, and a value may be 0 to L-1, where L is a sequence length. $v$ is a Doppler domain discrete index, and a value may be 0 to N-1, where N is the quantity of sent sequences. $C_x(\tau)$ and $C_y(\tau)$ are respectively autocorrelation results (for example, aperiodic autocorrelation results) of the sequence x and the sequence y. $e^{j2\pi vn/N}$ is a phase factor introduced by a Doppler shift.

$s_{ext}(n)$ represents an $n^{th}$ element in the extension sequence. The extension sequence is for determining whether each of the plurality of sequences is the sequence x or the sequence y. For example, when a value of a specific element in the extension sequence is 1, an $n^{th}$ sequence in the plurality of sequences is the sequence x; and when a value of a specific element in the extension sequence is -1, an $n^{th}$ sequence in the plurality of sequences is the sequence y.

Because the GCP has a perfect aperiodic autocorrelation property, impact of $\frac{1}{2}\left[C_x(\tau) + C_y(\tau)\right]\sum_{n=0}^{N-1} e^{j2\pi vn/N}$ on the ambiguity function may be ignored. In addition, when $\tau$ is set to different values, $\frac{1}{2}\left[C_x(\tau) - C_y(\tau)\right]\sum_{n=0}^{N-1} s_{ext}(n)e^{j2\pi vn/N}$ is always in direct proportion to $\sum_{n=0}^{N-1} s_{ext}(n)e^{j2\pi vn/N}$. That is, the ambiguity function is mainly affected by $\sum_{n=0}^{N-1} s_{ext}(n)e^{j2\pi vn/N}$. Therefore, it may be defined as follows: A Doppler spectral function $B$ of the extension sequence $s_{ext}$ satisfies the following formula (2-A):

$$B(v) = \sum_{n=0}^{N-1} s_{ext}(n)e^{j2\pi vn/N} \quad (2\text{-}A)$$

It may be understood that, because the ambiguity function of the plurality of sequences is mainly affected by the formula (2-A) when the N sequences are sent in the N consecutive time units with the equal duration, a low ambiguity zone of the spectral function described in the formula (2-A) may be equivalent to a low ambiguity zone of the ambiguity function.

For example, for the foregoing manner 1, when M is equal to 5 and N is equal to 32, a spectral function that is of a PTM sequence with a length of 32 and that is obtained according to the formula (2-A) is shown in FIG. 1b. A vertical coordinate is energy (or a value) of the spectral function, and is in a unit of dB. A horizontal coordinate is $2v$/N, where - N/2 $\leq v \leq N/2$, and v is a real number. For example, a threshold is -35 dB. It can be learned from FIG. 1b that a zone in which energy of the spectral function is less than or equal to -35 dB exists near a value of the horizontal coordinate being 0, in other words, a low ambiguity zone exists near the value of the horizontal coordinate being 0. When the horizontal coordinate is 0, a value of v is 0. v being 0 indicates that a moving speed of a target is 0, in other words, the target is still.

For the foregoing manner 2, using an example in which N is equal to 18 and the extension sequence in the manner 2 is [1, -1, 1, -1, 1, -1, 1, -1, 1, -1, 1, -1, 1, -1, 1, -1, 1, -1], a spectral function that is of the extension sequence and that is obtained according to the formula (2-A) is shown in FIG. 1c. A vertical coordinate is energy (or a value) of the spectral function, and is in a unit of dB. A horizontal coordinate is $2v$/N, where - N/2 $\leq v \leq N/2$, and v is a real number. It is assumed that a threshold is -35 dB, to be specific, a zone in which energy of the spectral function is less than -35 dB is considered as a low ambiguity zone. However, it can be learned from FIG. 1c that the energy of the spectral function corresponding to the extension sequence is always large, and there is no low ambiguity zone.

However, the foregoing sequence transmission manner has some limitations. For example, the plurality of sequences can be sent only in a plurality of consecutive time units with equal duration. Due to these limitations, a manner of sending the sequences cannot be flexibly adjusted. As a result, the ambiguity function of the sequences may be affected, and consequently, performance of detecting the target is affected. For example, for the foregoing manner 1, the low ambiguity zone of the ambiguity function of the plurality of sequences may not be further optimized due to these limitations. For example, the low ambiguity zone in the example shown in FIG. 1b may not be further optimized. For the foregoing manner 2, there may be no low ambiguity zone in the ambiguity function of the plurality of sequences. For example, there is no low ambiguity zone in the example shown in FIG. 1c.

In view of this, this application provides a sequence transmission method. In the method, a sending end sequentially sends $N_1$ first sequences. An equal time interval exists between time domain positions of any two adjacent first sequences in the $N_1$ first sequences. Alternatively, at least an integer p and an integer q exist, and a time interval between a time domain position of a $p^{th}$ first sequence in the $N_1$ first sequences and a time domain position of an adjacent sequence of the $p^{th}$ first sequence is different from a time interval between a time domain position of a $q^{th}$ first sequence in the $N_1$ first sequences and a time domain position of an adjacent sequence of the $q^{th}$ first sequence, where p and q are greater than or equal to 0 and less than or equal to $N_1$ - 1.

An $n'$th first sequence in the $N_1$ first sequences is determined based on an $n'$th first base sequence in $N_1$ first base sequences, $n' = 0, 1, \ldots,$ or $N_1 - 1$, and each first base sequence is a sequence in a GCP. In addition, when the equal time interval exists between time domain positions of any two adjacent first sequences, the $N_1$ first base sequences are related to a prime factor of $N_1$, or the $N_1$ first base sequences are predefined sequences.

According to the solution of this application, when the equal time interval exists between time domain positions of any two adjacent first sequences, it may be considered that the plurality of first sequences are sent at the equal interval. When the time interval between the $p$th first sequence and the adjacent sequence of the $p$th first sequence is different from the time interval between the $q$th first sequence and the adjacent sequence of the $q$th first sequence, it may be considered that the plurality of first sequences are sent at unequal intervals. In other words, the plurality of sequences may be sent in time domain at the equal interval or at the unequal intervals. Therefore, for different quantities $N_1$ of sequences and/or different sequence combinations, a time interval between time domain positions of the sequences may be flexibly adjusted, to adjust or optimize a low ambiguity zone of an ambiguity function of the plurality of sequences, and therefore improve detection performance. In other words, according to the solution of this application, flexibility of a sequence transmission manner can be improved, to improve the detection performance.

For example, when each first sequence in the $N_1$ sent first sequences is a sequence x or a sequence y in the GCP, and the $N_1$ first sequences are sent at the unequal intervals, an ambiguity function A may be approximately represented as the following formula (1-B):

$$A(\tau, v) \approx \frac{1}{2}\big[C_x(\tau) + C_y(\tau)\big] \sum_{n=0}^{N_1-1} e^{j2\pi v I_1(n)/N_1} +$$

$$\frac{1}{2}\big[C_x(\tau) - C_y(\tau)\big] \sum_{n=0}^{N_1-1} s_{ext}(n) e^{j2\pi v I_1(n)/N_1} \quad \text{(1-B)}$$

$I_1(n)$ is an $n$th element in a first position relationship sequence. The first position relationship sequence is described in the following embodiment, and details are not described herein. For descriptions of other parameters in the formula (1-B), refer to the related descriptions in the formula (1-A). Details are not described herein again.

Correspondingly, the extension sequence $s_{ext}$ satisfies the following formula (2-B) based on a Doppler spectral function $B$:

$$B(v) = \sum_{n=0}^{N_1-1} s_{ext}(n) e^{j2\pi v I_1(n)/N_1} \quad \text{(2-B)}$$

Optionally, in analogy with the analysis of sending a plurality of sequences at an equal interval, when the plurality of sequences are sent at the unequal intervals, the ambiguity function of the plurality of sequences is mainly affected by the formula (2-B). Therefore, a low ambiguity zone of the spectral function shown in the formula (2-B) may be equivalent to a low ambiguity zone of the ambiguity function.

The technical solutions in embodiments of this application may be applied to various communication systems. The communication system may be a 3rd generation partnership project (3rd generation partnership project, 3GPP) communication system, for example, a 4th generation (4th generation, 4G) mobile communication system or a 5th generation (5th generation, 5G) mobile communication system, a 6th generation (6th generation, 6G) mobile communication system or the like that evolves after 5G, a vehicle-to-everything (vehicle-to-everything, V2X) system, a device-to-device (device-to-device, D2D) communication system, a machine-to-machine (machine-to-machine, M2M) communication system, an Internet of things (Internet of things, IoT) communication system, a narrowband-Internet of things (narrowband-Internet of things, NB-IoT) communication system, another next-generation communication system, an integrated sensing and communication system, a satellite communication system, or the like. The communication system may alternatively be a non-3GPP communication system, for example, a wireless local area network (wireless local area network, WLAN) system such as a wireless fidelity (wireless fidelity, Wi-Fi) system. This is not limited.

The technical solutions in embodiments of this application may be applied to various communication scenarios, for example, sensing and downlink synchronization scenarios.

The foregoing communication systems and communication scenarios to which this application is applicable are merely examples for description, communication systems and communication scenarios to which this application is applicable are not limited thereto, and the foregoing descriptions do not constitute any limitation on the solutions of this application.

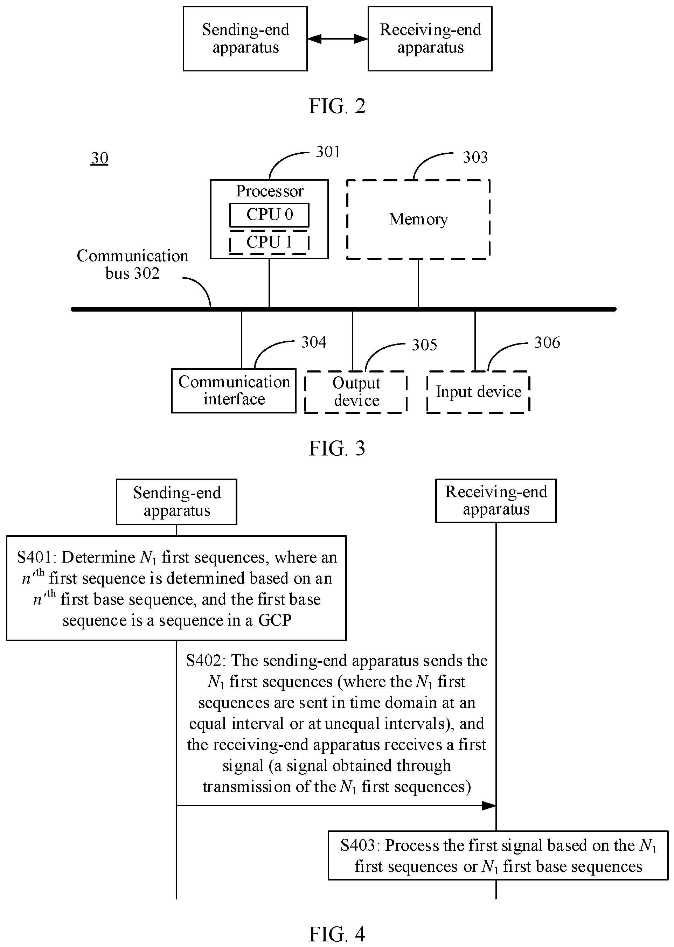

FIG. 2 is a diagram of a structure of a communication system according to this application. The communication system includes a sending-end apparatus and a receiving-end apparatus. The sending-end apparatus is configured to send sequences, and the receiving-end apparatus is configured to receive a signal formed through transmission of the sequences, and process the signal.

In a possible implementation, the sending-end apparatus and the receiving-end apparatus may be a same apparatus. For example, the sending-end apparatus and the receiving-end apparatus may be a same network device or a same terminal device. In this case, the sequences sent by the sending-end apparatus arrive at the receiving-end apparatus through reflection by a target object, and the receiving-end apparatus may process the received signal, to detect a location and/or a speed of the target object.

In another possible implementation, the sending-end apparatus and the receiving-end apparatus may be different apparatuses. For example, one of the sending-end apparatus and the receiving-end apparatus is a network device, and the other is a terminal device. Alternatively, the sending-end apparatus and the receiving-end apparatus are two different terminal devices or two different network devices. This is not specifically limited in this application. In this scenario, a target object may be understood as the sending-end apparatus or the receiving-end apparatus. The sequences sent by the sending-end apparatus arrive at the receiving-end apparatus through transmission. The receiving-end apparatus may process the received signal, to detect a location of the receiving-end apparatus relative to the sending-end apparatus and/or relative movement speeds of the receiving-end apparatus and the sending-end apparatus.

For example, in the downlink synchronization scenario, the sending-end apparatus may be a network device, and the receiving-end apparatus may be a terminal device. The network device may send a plurality of sequences. The terminal device may receive a signal formed through transmission of the plurality of sequences, and process the signal to detect relative locations of the terminal device and the network device, to determine a transmission delay between the terminal device and the network device based on the relative locations, and further perform downlink synchronization based on the transmission delay.

The terminal device in embodiments of this application may be a user-side device, for example, a terminal or a chip that may be used in the terminal, configured to implement a wireless communication function. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a public land mobile network (public land mobile network, PLMN) that evolves after 5G. The terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function or another processing device connected to a wireless modem, a vehicle-mounted device, an uncrewed aerial vehicle, a robot, a smart point of sale (point of sale, POS) machine, customer-premises equipment (customer-premises equipment, CPE) or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in an IoT, for example, a terminal in V2X (for example, an Internet of vehicles device), a terminal in D2D communication, or a terminal in M2M communication. The terminal may be mobile or fixed.

The network device in embodiments of this application is a device that connects the terminal device to a wireless network. The network device may be referred to as a node in a radio access network (radio access network, RAN), or may be referred to as a radio access network node (or device). A communication system may include a plurality of network devices, and the network devices may be nodes of a same type or nodes of different types.

In some possible scenarios, the network device may include an evolved NodeB (NodeB, eNB, or e-NodeB, evolved NodeB) in a long term evolution (long term evolution, LTE) system or an LTE-advanced (LTE-advanced, LTE-A) system, for example, a conventional macro-eNB, and a micro-eNB in a heterogeneous network scenario. Alternatively, the network device may include a next generation NodeB (next generation NodeB, gNB) in a new radio (new radio, NR) system. Alternatively, the network device may include a transmission reception point (transmission reception point, TRP), a home base station (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like. Alternatively, the network device may include a base station in an NTN, to be specific, may be deployed on a flying platform or a satellite. In the NTN, the network device may serve as a layer 1 (L1) relay (relay), may serve as a base station, or may serve as an integrated access and backhaul (integrated access and backhaul, IAB) node. Alternatively, the network device may be a device that is in an IoT and that implements functions of a base station, for example, a device that is in uncrewed aerial vehicle communication, V2X, D2D, or machine-to-machine (machine-to-machine, M2M) and that implements the functions of the base station.

In some possible scenarios, the network device may alternatively be a module or unit that can implement some functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP or the CU-UP), the DU, or the RU may also have different names, but a person skilled in the art can understand their meanings. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by a software module, a hardware module, or a combination of the software module and the hardware module.

Optionally, the CU and the DU may be divided based on protocol layers of a wireless network. For example, functions of a packet data convergence protocol (packet data convergence protocol, PDCP) layer and protocol layers (for example, a radio resource control (radio resource control, RRC) layer and a service data adaptation protocol (service data adaptation protocol, SDAP) layer) above the PDCP layer are set on the CU, and functions of protocol layers (for example, a radio link control (radio link control, RLC) layer, a medium access control (medium access control, MAC) layer, or a physical (physical, PHY) layer) below the PDCP layer are set on the DU. For another example, functions of protocol layers above a PDCP layer are set on the CU, and functions of the PDCP layer and protocol layers below the PDCP layer are set on the DU. This is not limited.

The division into the processing functions of the CU and the DU based on the protocol layers is merely an example, and there may alternatively be another division manner. For example, the CU or the DU may have more functions of protocol layers through division. For another example, the CU or the DU may have some processing functions of protocol layers through division. For example, some functions of the RLC layer and functions of protocol layers above the RLC layer are set on the CU, and remaining functions of the RLC layer and functions of protocol layers below the RLC layer are set on the DU. For another example, division into functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU.

Optionally, the base station in embodiments of this application may include various forms of base stations, for example, a macro base station, a micro base station (or referred to as a small cell), a relay station, an access point, a home base station, a TRP, a transmission point (transmission point, TP), or a mobile switching center. This is not specifically limited in embodiments of this application.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

Optionally, related functions of the sending-end apparatus or the receiving-end apparatus in this application may be implemented by a communication apparatus 30 in FIG. 3. Refer to FIG. 3. The communication apparatus 30 includes one or more processors 301. Further, the communication apparatus 30 may include a communication bus 302 and at least one communication interface (where FIG. 3 is merely an example, and descriptions are provided by using an example in which the communication apparatus 30 includes a communication interface 304 and one processor 301). Optionally, the communication apparatus 30 may further include a memory 303.

The processor 301 may be a general-purpose central processing unit (central processing unit, CPU), a microprocessor, an application-specific integrated circuit (application-specific integrated circuit, ASIC), one or more integrated circuits configured to control program execution for the solutions of this application, or a processing core configured to process data (for example, computer program instructions). The processor may be a single-core (single-CPU) processor, or may be a multi-core (multi-CPU) processor.

During specific implementation, in an embodiment, the processor 301 may include one or more CPUs, for example, a CPU 0 and a CPU 1 in FIG. 3.

The communication bus 302 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line represents the bus in FIG. 3, but this does not mean that there is only one bus or only one type of bus. The communication bus 302 is configured to connect different components in the communication apparatus 30, so that the different components in the communication apparatus 30 may communicate and interact with each other.

The communication interface 304 may be a transceiver module, and is configured to communicate with another device or a communication network. The communication network may be, for example, an Ethernet (Ethernet), a RAN, or a WLAN. For example, the communication interface 304 may be a transceiver or a transceiver machine. Alternatively, the communication interface 304 may be a transceiver circuit located in the processor 301, and is configured to implement signal input and signal output of the processor.

The memory 303 may be an apparatus having a storage function. For example, the memory 303 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, or the like), a magnetic disk storage medium or another magnetic storage device, or any other medium that can carry or store expected program code in a form of an instruction or a data structure and that can be accessed by a computer. However, the memory 303 is not limited thereto. The memory may exist independently, and is connected to the processor through the communication bus 302. The memory may alternatively be integrated with the processor.

For example, the memory 303 is configured to store computer-executable instructions for executing the solutions of this application, and the processor 301 controls the execution. The processor 301 is configured to execute the computer-executable instructions stored in the memory 303, to implement the method provided in embodiments of this application.

Alternatively, optionally, in this embodiment of this application, the processor 301 may perform processing-related functions in the method provided in the following embodiment in this application, and the communication interface 304 is responsible for communication with another device or a communication network. This is not specifically limited in this embodiment of this application.

Optionally, the computer-executable instructions in this embodiment of this application may also be referred to as application program code. This is not specifically limited in this embodiment of this application.

During specific implementation, in an embodiment, the communication apparatus 30 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensor device.

It should be noted that the composition structure shown in FIG. 3 does not constitute a limitation on the communication apparatus. In addition to the components shown in FIG. 3, more or fewer components than those shown in the figure may be included in the communication apparatus, some components may be combined, or there is different component arrangement.

With reference to the accompanying drawings, the following describes in detail the sequence transmission method provided in embodiments of this application. It may be understood that, in embodiments of this application, a sending-end apparatus or a receiving-end apparatus may perform some or all of steps in embodiments of this application. These steps or operations are merely examples, and other operations or variants of various operations may be further performed in embodiments of this application. In addition, the steps may be performed in a sequence different from a sequence presented in embodiments of this application, and not all operations in embodiments of this application may be performed.

FIG. 4 shows a sequence transmission method according to this application. Refer to FIG. 4. The sequence transmission method includes the following steps.

S401: A sending-end apparatus determines $N_1$ first sequences.

An $n'^{th}$ first sequence in the $N_1$ first sequences is determined based on an $n'^{th}$ first base sequence in $N_1$ first base sequences, where $n' = 0, 1, \ldots, N_1 - 1$. To be specific, a $0^{th}$ first sequence in the $N_1$ first sequences is determined based on a $0^{th}$ first base sequence in the $N_1$ first base sequences, and a $1^{st}$ first sequence in the $N_1$ first sequences is determined based on a $1^{st}$ first base sequence in the $N_1$ first base sequences. By analogy, an $(N_1-1)^{th}$ first sequence in the $N_1$ first sequences is determined based on an $(N_1-1)^{th}$ first base sequence in the $N_1$ first base sequences.

Each first base sequence in the $N_1$ first base sequences is a sequence in a GCP. To be specific, each first base sequence is a sequence x or a sequence y in the GCP. Lengths of the sequence x and the sequence y may be represented as L, where L is a positive integer. In other words, any first sequence in the $N_1$ first sequences is determined based on the sequence x or the sequence y in the GCP.

Lengths of all the $N_1$ first sequences are the same. The length of the first sequence may be represented as $L_1$.

$N_1$ is a positive integer greater than 1.

In a possible implementation, the $N_1$ first base sequences satisfy at least one of the following: The $N_1$ first base sequences are related to a prime factor of $N_1$, or the $N_1$ first base sequences are predefined sequences.

When the $N_1$ first base sequences are related to the prime factor of $N_1$, $N_1$ is a composite number. For example, $N_1 = \prod_{m=0}^{M-1} a_m$, where $a_m$ is a prime number, and M is a positive integer greater than 1. In other words, $a_m$ is a factor of $N_1$.

Because $a_m$ is a prime number, $a_m$ may also be referred to as a prime factor of $N_1$. For example, a sequence formed by sequentially concatenating M values of $a_m$(m = 0, ... , M - 1) may be referred to as a factor sequence $\boldsymbol{a}$, in other words, $\boldsymbol{a}$ = $[a_0, a_1, ..., a_{M-1}]$.

It may be understood that, when $N_1$ has at least two different factors, different arrangement manners of the M factors correspond to different factor sequences $\boldsymbol{a}$. For example, when $N_1$=18, the factor sequence may be $\boldsymbol{a}$ = [2,3,3], $\boldsymbol{a}$ = [3,2,3], or $\boldsymbol{a}$ = [3,3,2]. Optionally, for a specific value of $N_1$, the corresponding $N_1$ first sequences may vary with the factor sequence $\boldsymbol{a}$. The base sequence and a manner of determining the base sequence are described in detail in the following embodiment, and details are not described herein.

In a possible implementation, the $N_1$ first base sequences are a combination corresponding to a largest low ambiguity zone in possible combinations of $N_1$ base sequences.

For example, the $N_1$ first base sequences may be obtained through search. For example, all the possible combinations of the $N_1$ first base sequences may be searched for. For each combination, an ambiguity function of the combination is calculated to determine a size of a low ambiguity zone of the ambiguity function of the combination. The combination corresponding to the largest low ambiguity zone may be determined as the $N_1$ first base sequences.

In a possible implementation, the $N_1$ first base sequences may be determined based on a value of $N_1$.

For example, when $N_1$ is a fourth value, the $N_1$ first base sequences may be related to the prime factor of $N_1$. Alternatively, when $N_1$ is a fifth value, the $N_1$ first base sequences may be other predefined sequences, for example, may be sequences obtained by searching for the possible combinations of the $N_1$ base sequences. The fourth value may be, for example, 10, 12, 14, or 18, and the fifth value may be, for example, 14, 18, 22, or 24.

S402: The sending-end apparatus sequentially sends the $N_1$ first sequences. Correspondingly, a receiving-end apparatus receives a first signal.

Optionally, the $N_1$ first sequences are mapped and sent in time domain.

Optionally, sequentially sending the $N_1$ first sequences may be understood as: sequentially sending the $N_1$ first sequences in a sorting order of the $N_1$ first sequences. For example, an end time domain position of the $0^{th}$ first sequence is before a start time domain position of the $1^{st}$ first sequence, and an end time domain position of the $1^{st}$ first sequence is before a start time domain position of a $2^{nd}$ first sequence. By analogy, an end time domain position of an $(N_1 - 2)^{th}$ first sequence is before a start time domain position of the $(N_1 - 1)^{th}$ first sequence.

In a first possible implementation, an equal time interval exists between time domain positions of any two adjacent first sequences in the $N_1$ first sequences.

In other words, a time interval between a time domain position of the 0" first sequence and a time domain position of the $1^{st}$ first sequence, a time interval between the time domain position of the $1^{st}$ first sequence and a time domain position of the $2^{nd}$ first sequence, ..., and a time interval between a time domain position of an $(N_2 - 1)^{th}$ first sequence and a time domain position of the $(N_1 - 1)^{th}$ first sequence are all equal. In other words, the $N_1$ first sequences may be sent in time domain at the equal interval.

Optionally, one first sequence may occupy one segment of consecutive time domain resources (for example, one time unit) in total. In this scenario, a time domain position of a first sequence may be represented by at least one of the following: a start time domain position of the first sequence, an end time domain position of the first sequence, a time domain position of a specific intermediate element (a specific element other than a $0^{th}$ element and an $(L_1 - 1)^{th}$ element) in the first sequence, or time domain positions of at least two elements in the first sequence.

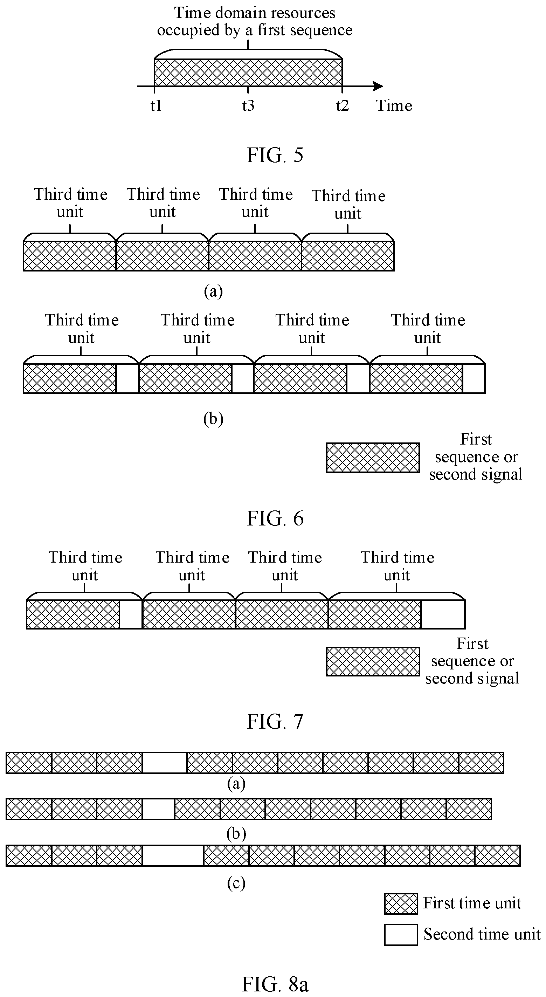

For example, as shown in FIG. 5, using an example in which consecutive time domain resources occupied by a first sequence are time domain resources between t1 and t2, a start time domain position of the first sequence may be t1, an end time domain position of the first sequence may be t2, and a time domain position of a specific intermediate element in the first sequence may be a specific time domain position, for example, t3, that is between t1 and t2.

In a second possible implementation, at least an integer p and an integer q exist, and a time interval between a time domain position of a $p^{th}$ first sequence in the $N_1$ first sequences and a time domain position of an adjacent sequence of the $p^{th}$ first sequence is different from a time interval between a time domain position of a $q^{th}$ first sequence in the $N_1$ first sequences and a time domain position of an adjacent sequence of the $q^{th}$ first sequence, where p and q are greater than or equal to 0 and less than or equal to $N_1 - 1$. The integer p is not equal to the integer q.

Optionally, the adjacent sequence of the $p^{th}$ first sequence may be a $(p+1)^{th}$ ($p \leq N_1 - 2$) first sequence in the $N_1$ first sequences or a $(p-1)^{th}$ ($p \geq 1$) first sequence in the $N_1$ first sequences. The adjacent sequence of the $q^{th}$ first sequence may be a $(q+1)^{th}$ ($q \leq N_1 - 2$) first sequence in the $N_1$ first sequences or a $(q-1)^{th}$ ($q \geq 1$) first sequence in the $N_1$ first sequences.

In other words, at least the integer p and the integer q exist, and a time interval between the time domain position of the $p^{th}$ first sequence in the $N_1$ first sequences and a time domain position of an adjacent sequence of the $(p-1)^{th}$ first sequence is different from a time interval between the time domain position of the $q^{th}$ first sequence in the $N_1$ first sequences and a time domain position of an adjacent sequence of the $(q-1)^{th}$ first sequence. p and q are greater than 0 and less than or equal to $N_1 - 1$. The integer p is not equal to the integer q.

Alternatively, at least the integer p and the integer q exist, and a time interval between the time domain position of the $p^{th}$ first sequence in the $N_1$ first sequences and a time domain position of an adjacent sequence of the $(p+1)^{th}$ first sequence is different from a time interval between the time domain position of the $q^{th}$ first sequence in the $N_1$ first sequences and a time domain position of an adjacent sequence of the $(q+1)^{th}$ first sequence. p and q are greater than or equal to 0 and less than or equal to $N_1$ - 2. The integer p is not equal to the integer q.

In other words, at least two time intervals that are not equal to each other exist in a total of $N_1$ - 1 time intervals between time domain positions of all two adjacent first sequences in the $N_1$ first sequences. In other words, the $N_1$ first sequences may be sent in time domain at unequal intervals.

Optionally, in the second possible implementation, the $N_1$ first base sequences for determining the $N_1$ first sequences may be related to the prime factor of $N_1$, may be predefined sequences, may be a PTM sequence, or may be the extension sequence in the GCP repetition solution described in the foregoing manner 2. Certainly, the $N_1$ first base sequences may alternatively be sequences determined in another manner. This is not specifically limited in this application.

Optionally, whether to send $N_1$ the first sequences in time domain at the equal interval or at the unequal intervals may depend on the quantity $N_1$ of first sequences.

For example, when $N_1$ is a sixth value, the $N_1$ first sequences may be sent in time domain at the equal interval; or when $N_1$ is a seventh value, the $N_1$ first sequences may be sent in time domain at the unequal intervals. The sixth value may be, for example, 14, 18, 22, or 24, and the seventh value may be, for example, 10, 12, 14, or 18.

Optionally, for different values of the quantity of first sequences and at a specific low ambiguity zone threshold, a sending manner that maximizes the low ambiguity zone may be sending at the equal interval or may be sending at the unequal intervals. In addition, it is easier to send the plurality of first sequences at the equal interval, that is, it is easier to allocate corresponding time domain resources to the first sequences. Therefore, a same quantity of first sequences may alternatively correspond to two different groups of first sequences. One group of first sequences is sent at an equal interval, and the other group of first sequences is sent at unequal intervals. One of the two groups of first sequences may be sent based on a requirement.

Optionally, that the sending-end apparatus sequentially sends the $N_1$ first sequences may include: The sending-end apparatus sends $N_1$ time domain signals (denoted as second signals) that are sequentially generated based on the $N_1$ first sequences. For example, when the sending-end apparatus is a network device, the second signal may be a reference signal.

The first signal received by the receiving-end apparatus may be understood as a signal obtained through transmission of the $N_1$ first sequences (or the $N_1$ second signals). For example, the first signal may be a signal received by the receiving-end apparatus through wireless transmission of the $N_1$ second signals.

Optionally, when the sending-end apparatus and the receiving-end apparatus are a same device, the first signal may be understood as an echo signal of the $N_1$ second signals.

S403: The receiving-end apparatus processes the first signal based on the $N_1$ first sequences or the $N_1$ first base sequences.

Optionally, the receiving-end apparatus may sample the first signal to obtain received sequences. The received sequences may be understood as received $N_1$ first sequences. Then, an ambiguity function between the $N_1$ first sequences (or the $N_1$ first base sequences) and the received sequences is calculated, to perform detection or sensing based on the ambiguity function.

For example, when the sending-end apparatus and the receiving-end apparatus are a same network device, the network device may detect a location and/or a speed of a target object (for example, a terminal device) based on the ambiguity function.

When the sending-end apparatus is a network device and the receiving-end apparatus is a terminal device, the terminal device may detect a transmission delay between the terminal device and the network device based on the ambiguity function, to perform downlink synchronization based on the transmission delay.

Optionally, when the sending-end apparatus and the receiving-end apparatus are different devices, the sending-end apparatus may indicate, to the receiving-end apparatus, the $N_1$ first sequences sent by the sending-end apparatus or the $N_1$ first base sequences corresponding to the $N_1$ first sequences. For example, a plurality of sequence sets may be preconfigured in the sending-end apparatus and the receiving-end apparatus (where each sequence set includes $N_1$ sequences), and the sending-end apparatus may send, to the receiving-end apparatus, an index of a first sequence set including the $N_1$ first sequences, to indicate the $N_1$ first sequences. Alternatively, when one value of $N_1$ corresponds to one sequence set, the sending-end apparatus may send or indicate the value of $N_1$ to the receiving-end apparatus, to indicate the $N_1$ first sequences by using the value of $N_1$. Similarly, a plurality of base sequence sets may alternatively be preconfigured in the sending-end apparatus and the receiving-end apparatus (where each base sequence set may include $N_1$ base sequences), and the sending-end apparatus indicates the $N_1$ first base sequences to the receiving-end apparatus. For details, refer to the manner of indicating the $N_1$ first sequences, and the details are not described herein again.

According to this solution, when the equal time interval exists between time domain positions of any two adjacent first sequences, it may be considered that the plurality of first sequences are sent at the equal interval. When the time interval between the $p^{th}$ first sequence and the adjacent sequence of the $p^{th}$ first sequence is different from the time interval between the $q^{th}$ first sequence and the adjacent sequence of the $q^{th}$ first sequence, it may be considered that the plurality of first sequences are sent at the unequal intervals. In other words, the plurality of sequences may be sent in time domain at the equal interval or at the unequal intervals. Therefore, for different quantities $N_1$ of sequences and/or different combinations of first sequences, a time interval between time domain positions of the sequences may be flexibly adjusted, to adjust or optimize the low ambiguity zone of the ambiguity function of the plurality of sequences, and therefore improve detection performance. In other words, the solution of this application provides a degree of design freedom in a broader sense, so that flexibility of a sequence transmission manner can be improved, to improve the detection performance.

The foregoing describes an overall procedure for the sequence transmission method provided in this application. The following describes a design of the time domain position of the first sequence.

In a possible implementation, when at least the integer p and the integer q exist, that is, when the $N_1$ first sequences are sent in time domain at the unequal intervals, a time domain position of each first sequence in the $N_1$ first sequences is related to the prime factor of $N_1$. In another possible implementation, a time domain position of each first sequence is related to the prime factor of $N_1$ and an offset.

Optionally, when a time domain position of the $n'^{th}$ first sequence in the $N_1$ first sequences is represented by a start time domain position of the $n'^{th}$ first sequence, a ratio of the start time domain position of the $n'^{th}$ first sequence to the length of the first sequence is an $n'^{th}$ element in a first position relationship sequence. The first position relationship sequence may indicate a relative start position of each first sequence in the $N_1$ first sequences, and the time domain position of each first sequence in the $N_1$ first sequences may be determined based on the first position relationship sequence and the length of the first sequence.

For example, possible implementations of the first position relationship sequence that correspond to different values of $N_1$ may be enumerated in Table 1.

Table 1

| $N_1$ | First position relationship sequence |
|---|---|
| 10 | [0, 1, 2.5, 3.5, 5, 6, 7.5, 8.5, 10, 11] |
| 12 | [0, 1, 3, 4, 6, 7, 8, 9, 11, 12, 14, 15] |
| 16 | [0, 1, 2, 3, 5.5, 6.5, 7.5, 8.5, 9.5, 10.5, 11.5, 12.5, 15, 16, 17, 18] |
| 16 | [0, 1, 2, 3, 6.75, 7.75, 8.75, 9.75, 10.75, 11.75, 12.75, 13.75, 17.5, 18.5, 19.5, 20.5] |
| 18 | [0, 1, 2.25, 3.25, 4.5, 5.5, 11.25, 12.25, 13.5, 14.5, 15.75, 16.75, 22.5, 23.5, 24.75, 25.75, 27, 28] |
| 20 | [0, 1, 2, 3, 5, 6, 7, 8, 10, 11, 12, 13, 15, 16, 17, 18, 20, 21, 22, 23] |
| 22 | [0, 1, 3, 4, 6, 7, 9, 10, 12, 13, 15, 16, 18, 19, 21, 22, 24, 25, 27, 28, 30, 31] |
| 24 | [0, 1, 2, 3, 4, 5, 6, 7, 8, 9, 10, 11, 12.25, 13.25, 14.25, 15.25, 16.25, 17.25, 18.25, 19.25, 20.25, 21.25, 22.25, 23.25] |
| 36 | [0, 1, 2, 3, 4, 5, 6, 7, 8, 9, 10, 11, 12, 13, 14, 15, 16, 17, 19, 20, 21, 22, 23, 24, 25, 26, 27, 28, 29, 30, 31, 32, 33, 34, 35, 36] |
| 36 | [0, 1, 2, 3, 4, 5, 6, 7, 8, 9, 10, 11, 12, 13, 14, 15, 16, 17, 19.75, 20.75, 21.75, 22.75, 23.75, 24.75, 25.75, 26.75, 27.75, 28.75, 29.75, 30.75, 31.75, 32.75, 33.75, 34.75, 35.75, 36.75] |
| 36 | [0, 1, 2, 3, 4, 5, 6, 7, 8, 9, 10, 11, 12, 13, 14, 15, 16, 17, 20, 21, 22, 23, 24, 25, 26, 27, 28, 29, 30, 31, 32, 33, 34, 35, 36, 37] |

Optionally, when the sending-end apparatus is a terminal device, before step S402, a network device may indicate the first position relationship sequence to the sending-end apparatus by using signaling, so that the terminal device determines the time domain position of each first sequence, to send the first sequence. The signaling may be RRC signaling or downlink control information (downlink control information, DCI).

For example, the first position relationship sequence enumerated in Table 1 may be preconfigured (or stored) in the sending-end apparatus. The network device may indicate the 11 possible values of the first position relationship sequence in Table 1 by using RRC signaling of four bits. For example, 11 possible values in 16 possible values of the four bits may one-to-one correspond to the 11 possible values of the first position relationship sequence that are enumerated in Table 1. The network device may send a specific value of the four bits to the sending-end apparatus. In this case, the first position relationship sequence indicated by the network device is a first position relationship sequence corresponding to the value.

Alternatively, each first position relationship sequence enumerated in Table 1 may correspond to one index. For example, indexes of the first position relationship sequences enumerated in the rows from top to bottom in Table 1 may be 1 to 11 or 0 to 10. In this case, the network device may indicate, to the terminal device, an index corresponding to the first position relationship sequence, and the terminal device may determine, based on the index indicated by the network device, the first position relationship sequence corresponding to the index.

Optionally, all possible values of the first position relationship sequence may be a part or all of the possible values in Table 1.

Optionally, when the sending-end apparatus and the receiving-end apparatus are different apparatuses, before step S402, the sending-end apparatus may indicate the first position relationship sequence to the receiving-end apparatus, so that the receiving-end apparatus determines the time domain position of each first sequence, to receive the first sequence.

For example, the first position relationship sequence enumerated in Table 1 may be preconfigured (or stored) in the sending-end apparatus and the receiving-end apparatus. The sending-end apparatus may indicate the 11 possible values of the first position relationship sequence in Table 1 by using signaling of four bits. For details, refer to the related descriptions of indicating the first position relationship sequence by the network device to the terminal device, and the details are not described herein again.

Optionally, the $n'^{\text{th}}$ element $I_1(n')$ (or a value of the $n'^{\text{th}}$ element) in the first position relationship sequence satisfies the following formula (3):

$$I_1(n') = n' + \sum_{m=0}^{M-1} (b_m \times d_m) \ (3)$$

$b_m$ satisfies $n' = \sum_{m=0}^{M-1}(b_m \times \prod_{i=-1}^{m-1} a_i)$, $a_{-1} = 1$, and $b_m = 0, 1, ..., or \ a_m - 1$; $N_1 = \prod_{m=0}^{M-1} a_m$, $a_m$ is the prime factor of $N_1$, $m = 0, 1, ..., M - 1$, and M is a positive integer greater than 1; and $d_m$ is the offset, and $d_m$ is a real number greater than or equal to 0.

Based on the foregoing relationship, $b_0, b_1, ..., b_{M-1}$ may be obtained by using the factor sequence $a = [a_0, a_1, ..., a_{M-1}]$ and the index n'. In addition, the value of the $n'^{\text{th}}$ element is obtained based on $b_0, b_1, ..., b_{M-1}$ and $d_0, d_1, ..., d_{M-1}$ (namely, $d_m$). $b_0, b_1, ..., b_{M-1}$ may be represented as a sequence $b$, in other words, $b = [b_0, b_1, ..., b_{M-1}]$. $d_0, d_1, ..., d_{M-1}$ may be represented as a sequence $d$, in other words, $d = [d_0, d_1, ..., d_{M-1}]$. Therefore, the value of the first position relationship sequence may be determined provided that values of the factor sequence $a$ and the sequence $d$ are determined. The sequence $d$ may also be referred to as an offset sequence. That is, M offsets $d_0, d_1, ..., d_{M-1}$ form the offset sequence.

Optionally, because $b_m$ satisfies $n' = \sum_{m=0}^{M-1}(b_m \times \prod_{i=-1}^{m-1} a_i)$, the index n' corresponds to one sequence $b$, and different values of n' correspond to different sequences $b$. For example, using an example in which N=18, in other words, n' = 0, 1, ..., or 17, and $a = [2, 3, 3]$, sequences $b$ corresponding to values of n' may be enumerated in Table 2.

Table 2

| n' | $b = [b_0, b_1, b_2]$ | n' | $b = [b_0, b_1, b_2]$ |
|----|----|----|----|
| 0 | [0, 0, 0] | 9 | [1, 1, 1] |
| 1 | [1, 0, 0] | 10 | [0, 2, 1] |
| 2 | [0, 1, 0] | 11 | [1, 2, 1] |
| 3 | [1, 1, 0] | 12 | [0, 0, 2] |
| 4 | [0, 2, 0] | 13 | [1, 0, 2] |
| 5 | [1, 2, 0] | 14 | [0, 1, 2] |
| 6 | [0, 0, 1] | 15 | [1, 1, 2] |
| 7 | [1, 0, 1] | 16 | [0, 2, 2] |
| 8 | [0, 1, 1] | 17 | [1, 2, 2] |

Optionally, Table 3 enumerates values provided in this application that are of the factor sequence $a$ and the sequence $d$ and that correspond to some values of $N_1$.

Table 3

| $N_1$ | Factor sequence $a$ | Sequence $d$ |
|---|---|---|
| 10 | [2, 5] | [0, 0.5] |
| 12 | [2, 3, 2] | [0, 1, 2] |
| 16 | [2, 2, 2, 2] | [0, 0, 1.5, 1.5] |
| 16 | [2, 2, 2, 2] | [0, 0, 2.75, 2.75] |
| 18 | [2, 3, 3] | [0, 0.25, 5.25] |
| 20 | [2, 2, 5] | [0, 0, 1] |
| 22 | [2, 11] | [0, 1] |
| 24 | [2, 3, 2, 2] | [0, 0, 0, 0.25] |
| 36 | [2, 3, 3, 2] | [0, 0, 0, 1] |
| 36 | [2, 3, 3, 2] | [0, 0, 0, 1.75] |
| 36 | [2, 3, 3, 2] | [0, 0, 0, 2] |

Optionally, the first position relationship sequence enumerated in each row in Table 1 may be determined based on the formula (3) and the factor sequence $a$ and the sequence $d$ in the same row in Table 3. Certainly, the first position relationship sequence may alternatively be determined in another manner. This is not specifically limited in this application.

According to the foregoing formula (3), a value of each element in the first position relationship sequence may be determined in a structured manner, to determine the start time domain position of each first sequence. For a specific value of $N_1$, compared with a manner of searching for start time domain positions of the $N_1$ first sequences through blind permutation and combination, the foregoing structured solution can reduce search complexity. This is because: In the foregoing structured solution, only the values of the factor sequence $a$ and the sequence $d$ need to be searched for. All elements in the factor sequence $a$ are prime factors of $N_1$, and a quantity of elements in the sequence $d$ is a quantity of prime factors of $N_1$ and is small. Therefore, when the value of $N_1$ is determined, complexity of searching for the values of the factor sequence $a$ and the sequence $d$ is low.

The foregoing describes the overall procedure for the sequence transmission method provided in this application. The following describes in detail the sequence transmission manner in step S402.

Manner 1: The sending-end apparatus sequentially sends the $N_1$ first sequences in $N_1$ consecutive third time units.

For example, the sending-end apparatus sends the $n$th first sequence in the $N_1$ first sequences in an $n$'th third time unit in the $N_1$ consecutive third time units. In other words, one first sequence is sent in one third time unit, and the $N_1$ consecutive third time units one-to-one correspond to the $N_1$ first sequences.

Optionally, the sending-end apparatus may generate an $n$'th second signal based on the $n$'th first sequence in the $N_1$ first sequences (where the second signal is a continuous time domain signal), and the $n$'th second signal is sent in the $n$'th third time unit. In other words, a second signal generated based on one first sequence is sent in one third time unit, and the $N_1$ consecutive third time units one-to-one correspond to the $N_1$ second signals generated based on the $N_1$ first sequences.

For example, the sending-end apparatus may perform at least one operation in upsampling (upsampling), filtering, digital-to-analog conversion (digital-to-analog conversion), up-conversion (up-conversion) (or referred to as up-conversion), and digital-to-analog conversion on the $n$'th first sequence with the length of $L_1$, to generate the $n$'th second signal with duration of $L_1 \times P \times T_s$.

Correspondingly, when the $n$'th second signal is sampled at an interval of $T_s$, $L_1 \times P$ discrete values may be obtained. The $L_1 \times P$ discrete values may be referred to as a discrete time domain signal. The discrete time domain signal may alternatively be obtained by performing upsampling, filtering, and the like on the $n$'th first sequence by using $P$. Alternatively, when the $n$'th second signal is sampled at an interval of $P \times T_s$, $L_1$ discrete values may be obtained. The $L_1$ discrete values may be referred to as a discrete time domain signal, and the discrete time domain signal may be approximately understood as the $n$'th first sequence with the length of $L_1$.

It may be understood that, because the lengths $L_1$ of all the $N_1$ first sequences are the same, duration of the second signals generated based on the first sequences is also the same.

Optionally, a length of each third time unit in the $N_1$ consecutive third time units is greater than or equal to the length of the first sequence. A length of the $n$'th third time unit may be represented as $L_{n'}^{unit}$, that is, $L_{n'}^{unit} \geq L_1$. In addition, that the length of the $n$'th third time unit is $L_{n'}^{unit}$ indicates: The $n$'th third time unit may include $L_{n'}^{unit}$ discrete positions, and can be for sending $L_{n'}^{unit}$ discrete values.

Alternatively, duration of each third time unit is greater than or equal to duration of the second signal generated based on the first sequence. Duration of the $n$'th third time unit may be represented as $L_{n'}^{unit} \times P \times T_s$, that is, $L_{n'}^{unit} \times P \times T_s \geq L_1 \times P \times T_s$.

In a possible implementation, the $n$'th third time unit may include $L_{n'}^{unit}$ single-carrier symbols or $L_{n'}^{unit}$ single-carrier quadrature amplitude modulation symbols. One value (for example, one complex value) may be sent on each single-carrier symbol or each single-carrier quadrature amplitude modulation symbol. Duration of each single-carrier symbol or each single-carrier quadrature amplitude modulation symbol is $P \times T_s$. $L_{n'}^{unit}$ is a positive integer. In this case, a time domain signal on each single-carrier symbol (or each single-carrier quadrature amplitude modulation symbol) may be obtained by performing at least one operation in upsampling, filtering, digital-to-analog conversion, up-conversion (or referred to as up-conversion), and digital-to-analog conversion on the value sent on the single-carrier symbol.

For example, one value in the first sequence may be sent on one single-carrier symbol in the $L_{n'}^{unit}$ single-carrier symbols, in other words, one first sequence with the length of $L_1$ may be sent on $L_1$ single-carrier symbols in the $L_{n'}^{unit}$ single-carrier symbols. The second signal includes a time domain signal on the $L_1$ single-carrier symbols corresponding to the first sequence.

In another possible implementation, the $n$'th third time unit may include at least one single-carrier frequency division multiple access symbol.

For example, the $n$'th third time unit includes one single-carrier frequency division multiple access symbol, and duration of the single-carrier frequency division multiple access symbol is $L_{n'}^{unit} \times P \times T_s$. Alternatively, the $n$'th third time unit includes one single-carrier frequency division multiple access symbol and a cyclic prefix (cyclic prefix, CP) of the single-carrier frequency division multiple access symbol. Alternatively, the $n$'th third time unit may include one single-carrier frequency division multiple access symbol and zero padding (zero padding, ZP) of the single-carrier frequency division multiple access symbol.

When the length of the $n$'th third time unit is equal to the length of the first sequence, the duration of the second signal is the same as the duration of the third time unit. In this case, the second signal is the single-carrier frequency division multiple access symbol, and the $n$'th second signal may be obtained by performing a Fourier transform (Fourier transform) and an inverse Fourier transform (inverse Fourier transform) on the $n$'th first sequence, or the $n$'th second signal may be obtained by performing a Fourier transform, resource mapping, and an inverse Fourier transform on the $n$'th first sequence.

A quantity of points of the Fourier transform and a quantity of points of the inverse Fourier transform may be the same or different. This is not limited in this application. The quantity of points of the Fourier transform may be a length of a discrete Fourier transform, namely, a quantity of values output through the discrete Fourier transform. The quantity of points of the inverse Fourier transform may be a length of an inverse discrete Fourier transform, namely, a quantity of values output through the inverse discrete Fourier transform.

For example, the $n$'th third time unit includes $N_{scfdma}$ single-carrier frequency division multiple access symbols, and duration of one single-carrier frequency division multiple access symbol is $L_{n'}^{unit} \times P \times T_s/N_{scfdma}$. Alternatively, the $n$'th third time unit includes $N_{scfdma}$ single-carrier frequency division multiple access symbols and $N_{scfdma}$ cyclic prefixes corresponding to the $N_{scfdma}$ single-carrier frequency division multiple access symbols. Alternatively, the $n$'th third time unit includes $N_{scfdma}$ single-carrier frequency division multiple access symbols and $N_{scfdma}$ times of zero padding corresponding to the $N_{scfdma}$ single-carrier frequency division multiple access symbols. $N_{scfdma}$ is a positive integer greater than 1.

Optionally, one first sequence with the length of $L_1$ may be divided into $N_{scfdma}$ first subsequences, and each first subsequence includes $L_{sub,1}$ elements. The $N_{scfdma}$ first subsequences include $N_{scfdma}L_{sub,1}$ elements in total, where $N_{scfdma}L_{sub,1} \geq L_1$. First $L_1$ elements in a sequence obtained by sequentially concatenating the $N_{scfdma}$ first subsequences form the first sequence.

When $N_{scfdma}L_{sub,1} > L_1$, last $N_{scfdma}L_{sub,1} - L_1$ elements in a last first subsequence in the $N_{scfdma}$ first subsequences are 0, where $(N_{scfdma} - 1)L_{sub,1} < L_1$.

The $N_{scfdma}$ single-carrier frequency division multiple access symbols in the third time unit one-to-one correspond to the $N_{scfdma}$ first subsequences. Specifically, an $i$'th single-carrier frequency division multiple access symbol may be obtained by performing a Fourier transform (Fourier transform) and an inverse Fourier transform (inverse Fourier transform) on an $i$'th first subsequence, or may be obtained by performing a Fourier transform, resource mapping, and an inverse Fourier transform on an $i$'th first subsequence, where i' = 0,1, ..., or $N_{scfdma} - 1$.

Optionally, the $n$'th first sequence in the $N_1$ first sequences is mapped starting from a start position in the $n$'th third time unit in the $N_1$ consecutive third time units. That is, the $n'^{th}$ first sequence is mapped to first $L_1$ positions in the $n'^{th}$ third time unit, in other words, the $n'^{th}$ first sequence is used as first $L_1$ values in the $n'^{th}$ third time unit. Alternatively, the $n'^{th}$ second signal generated based on the $n'^{th}$ first sequence is sent in first duration of $L_1 \times P \times T_s$ in the $n'^{th}$ third time unit.

In this case, a ratio of the time domain position of the $n'^{th}$ first sequence in the $N_1$ first sequences to the length of the first sequence is an $n'^{th}$ element in a first position relationship sequence, and the $n'^{th}$ element $I_1$ (n') in the first position relationship sequence may satisfy the foregoing formula (3):

$$I_1(n') = n' + \sum_{m=0}^{M-1} (b_m \times d_m) \ (3)$$

In addition, the $n'^{th}$ first sequence may alternatively be mapped starting from another position in the $n'^{th}$ third time unit, provided that the $n'^{th}$ first sequence is completely mapped in the $n'^{th}$ third time unit. This is not specifically limited in this application.

For example, an end mapping position (or referred to as an end time domain position) of the $n'^{th}$ first sequence may be the same as an end position in the $n'^{th}$ third time unit. In this case, the time domain position of the $n'^{th}$ first sequence in the $N_1$ first sequences is the end mapping position of the $n'^{th}$ first sequence. A ratio of the time domain position of the $n'^{th}$ first sequence in the $N_1$ first sequences to the length of the first sequence is an $n'^{th}$ element in a first position relationship sequence, and the $n'^{th}$ element $I_1(n')$ in the first position relationship sequence may satisfy the following formula (3'):

$$I_1(n') = 1 + n' + \sum_{m=0}^{M-1} (b_m \times d_m) \ (3')$$

For detailed descriptions of the formula (3), refer to the foregoing descriptions of the formula (3). For descriptions of the formula (3'), refer to the descriptions of the formula (3). Details are not described herein again.

Optionally, when the duration of the $n'^{th}$ third time unit is represented as $L_{n'}^{unit} \times P \times T_s$, total duration of the $N_1$ consecutive third time units may be represented as $\sum_{n'=0}^{N_1-1} L_{n'}^{unit} \times P \times T_s$. $\sum_{n'=0}^{N_1-1} L_{n'}^{unit}$ discrete points may be obtained by performing sampling in the total duration of the $N_1$ consecutive third time units at an interval of $P \times T_s$. $\sum_{n'=0}^{N_1-1} L_{n'}^{unit}$ may be understood as a total length of the $N_1$ consecutive third time units, or may be understood as a total quantity of discrete time domain positions in the $N_1$ consecutive third time units.

For the time domain position of the first sequence:

In a first possible implementation, the time domain position of the first sequence may be represented by at least one of the following: a discrete time domain position of a start element in the first sequence (where the discrete time domain position may be referred to as the start time domain position of the first sequence), a discrete time domain position of an end element in the first sequence (where the discrete time domain position may be referred to as the end time domain position of the first sequence), or a discrete time domain position of a specific intermediate element (an element other than the start element and the end element) in the first sequence.

For example, when 0 to $[\sum_{n'=0}^{N_1-1} L_{n'}^{unit}] - 1$ are numbers of $\sum_{n'=0}^{N_1-1} L_{n'}^{unit}$ discrete time domain positions in the $N_1$ consecutive third time units, if the first sequence is mapped starting from a start position in the third time unit, the discrete time domain position of the start element in the $n'^{th}$ first sequence is $\sum_{i=-1}^{n'-1} L_i^{unit}$. $L_{-1}^{unit} = 0$, and $L_i^{unit}$ represents a length of an $i^{th}$ third time unit.

For example, when 0 to $[\sum_{n'=0}^{N_1-1} L_{n'}^{unit}] - 1$ are numbers of $\sum_{n'=0}^{N_1-1} L_{n'}^{unit}$ discrete time domain positions in the $N_1$ consecutive third time units, if the end mapping position (or referred to as the end time domain position) of the $n'^{th}$ first sequence is the same as the end position in the $n'^{th}$ third time unit, the discrete time domain position (namely, the end mapping position) of the end element in the $n'^{th}$ first sequence is $\sum_{i=0}^{n'} L_i^{unit}$. $L_i^{unit}$ represents a length of an $i^{th}$ third time unit. The end position in the $n'^{th}$ third time unit may also be referred to as an end position or an end time domain position in the $n'^{th}$ third time unit.

In a second possible implementation, the time domain position of the first sequence may be represented by at least one of the following: a start time domain position of the second signal generated based on the first sequence (where the start time domain position may be referred to as the start time domain position of the first sequence), an end time domain position of the second signal generated based on the first sequence (where the end time domain position may be referred to as the end time domain position of the first sequence), or a specific time domain position other than the start time domain position and the end time domain position of the second signal in a total time domain resource occupied by the second signal.

For example, when a start moment of the $N_1$ consecutive third time units with the total duration of $\sum_{n'=0}^{N_1-1} L_{n'}^{unit} \times P \times T_s$ is defined as 0, if the first sequence is mapped starting from the start position in the third time unit, a start time domain position of the second signal generated based on the $n'$th first sequence is $\sum_{i=-1}^{n'-1} L_i^{unit} \times P \times T_s$, where $L_{-1}^{unit} = 0$.

For example, when a start moment of the $N_1$ consecutive third time units with the total duration of $\sum_{n'=0}^{N_1-1} L_{n'}^{unit} \times P \times T_s$ is defined as 0, if an end mapping position or referred to as an end time domain position) of the $n'$th second signal is the same as the end position in the $n'$th third time unit, the end time domain position of the second signal generated based on the $n$th first sequence is $\sum_{i=0}^{n'} L_i^{unit} \times P \times T_s$.

In other words, in the first possible implementation, the start time domain position of the first sequence may be represented as $\sum_{i=-1}^{n'-1} L_i^{unit}$. In this case, the start time domain position may be understood as a start time domain position that is represented from a perspective of time domain discreteness. The end time domain position of the first sequence may be represented as $\sum_{i=0}^{n'} L_i^{unit}$. In this case, the end time domain position may be understood as an end time domain position that is represented from the perspective of time domain discreteness. In the second possible implementation, the (continuous) start time domain position of the first sequence may be represented as $\sum_{i=-1}^{n'-1} L_i^{unit} \times P \times T_s$. In this case, the start time domain position may be understood as a start time domain position that is represented from a perspective of time domain continuity. The end time domain position of the first sequence may be represented as $\sum_{i=0}^{n'} L_i^{unit} \times P \times T_s$. In this case, the end time domain position may be understood as an end time domain position that is represented from the perspective of time domain continuity

For a relationship between lengths or duration of the $N_1$ consecutive third time units:

In a first possible implementation, the lengths of all the $N_1$ consecutive third time units are equal. Alternatively, the duration of all the third time units is equal.

Optionally, when the lengths or the duration of all the third time units are equal, if the length of the third time unit is equal to the length of the first sequence, or the duration of the third time unit is equal to the duration of the second signal generated based on the first sequence, the $N_1$ first sequences may be sent at the equal interval.

For example, when the duration of the third time units is equal, and the duration of the third time unit is equal to the duration of the second signal generated based on the first sequence, the position of the first sequence (or the second signal) in the third time unit may be shown in (a) in FIG. 6.

Alternatively, when the lengths or the duration of all the third time units are/is equal, the length of the third time unit is greater than the length of the first sequence, and the duration of the third time unit is greater than the duration of the second signal generated based on the first sequence, if each first sequence is mapped starting from a same position (for example, a start position) in a corresponding third time unit, the $N_1$ first sequences may be sent at the equal interval. In this case, the length of each third time unit may be a multiple of the length of the first sequence, in other words, the duration of each third time unit may be a multiple of the duration of the second signal. This is not specifically limited in this application.

For example, when the duration of the third time units is equal, and is greater than the duration of the second signals, and when the first sequence is mapped starting from the start position in the third time unit, a position of the first sequence (or the second signal) in the third time unit may be shown in (b) in FIG. 6. Refer to (b) in FIG. 6. An equal time interval exists between time domain positions of any two adjacent first sequences.

Optionally, when the length of the third time unit is greater than the length of the first sequence, in other words, the duration of the third time unit is greater than the duration of the second signal generated based on the first sequence, no data may be sent or another type of data (for example, communication data) instead of a sequence may be sent in a remaining period of time in the third time unit. This is not specifically limited in this application.

The remaining period of time in the third time unit is a period of time not for sending the first sequence. Duration of the remaining period of time may be $(L_{n'}^{unit} - L_1) \times P \times T_s$.

In a second possible implementation, lengths of at least two third time units in the $N_1$ consecutive third time units are not equal. Alternatively, duration of at least two third time units is not equal. Alternatively, a length of at least one third time unit is greater than the length of the first sequence, or duration of at least one third time unit is greater than the duration of the second signal generated based on the first sequence.

In the second possible implementation, the $N_1$ first sequences may be sent at the unequal intervals. For example, as shown in FIG. 7, duration of a $0^{th}$ third time unit is not equal to duration of a $1^{st}$ third time unit, the duration of the $1^{st}$ third time unit is equal to duration of a $2^{nd}$ third time unit, and duration of a $3^{rd}$ third time unit may be equal to or may not be equal to the duration of the $1^{st}$ third time unit. In this case, if each first sequence is mapped starting from a same position (for example, a start position) in a corresponding third time unit, as shown in FIG. 7, the $N_1$ first sequences may be sent at the unequal intervals.

Optionally, for a third time unit with duration greater than the duration of the second signal, no data may be sent or another type of data may be sent in a remaining period of time in the third time unit. For details, refer to the related descriptions in the first possible implementation, and the details are not described herein again.

Optionally, in the second possible implementation, for a start time domain position of the $n'^{th}$ first sequence, refer to the related descriptions of the start time domain position of the first sequence when at least the integer p and the integer q exist. The length of each third time unit may be determined in the following two manners:

Manner (1): The lengths of the $N_1$ consecutive third time units may be determined based on the $n'^{th}$ element in the first position relationship sequence.

In a first possible example, when n' = 0,1, ..., or $N_1$ - 2, and the $n'^{th}$ first sequence in the $N_1$ first sequences is mapped starting from the start position in the $n'^{th}$ third time unit in the $N_1$ consecutive third time units, a length of an (n' - 1)$^{th}$ third time unit and the $n'^{th}$ element in the first position relationship sequence may satisfy the following formula (4):

$$I_1(n') = \sum_{i=-1}^{n'-1} L_i^{unit} / L_1 \quad (4)$$

$L_i^{unit}$ represents the length of the $i^{th}$ third time unit, $L_{-1}^{unit} = 0$, and $L_1$ represents the length of the first sequence. $\sum_{i=-1}^{n'-1} L_i^{unit}$ represents a start time domain position of the $i^{th}$ third time unit.

Optionally, in the first possible example, a value of the $n'^{th}$ element in the first position relationship sequence may be enumerated in Table 1, or may be calculated according to the foregoing formula (3).

In a second possible example, when n' = 0,1, ..., or $N_1$ - 2, and the $n'^{th}$ first sequence in the $N_1$ first sequences is mapped starting from the start position in the $n'^{th}$ third time unit in the $N_1$ consecutive third time units, a length of an (n' - 1)$^{th}$ third time unit and the $n'^{th}$ element in the first position relationship sequence may satisfy the following formula (5):

$$I_1(n') = \frac{\sum_{i=-1}^{n'-1} L_i^{unit}}{L_1} - n' \quad (5)$$

Optionally, the foregoing formula (4) or formula (5) may also be understood as relationships between lengths of the $0^{th}$ third time unit to the (n' - 1)$^{th}$ third time unit and the $n'^{th}$ element in the first position relationship sequence.

Optionally, in the second possible example, first position relationship sequences corresponding to different values of $N_1$ may be obtained based on Table 1 and a relationship between the formula (4) and the formula (5). For example, a value of the $n'^{th}$ element in the first position relationship sequence may be obtained by subtracting n' from the value that is of the $n'^{th}$ element and that is enumerated in Table 1.

Optionally, in the first and second possible examples, a ratio of a length of an $(N_1 - 1)^{th}$ third time unit to the length of the first sequence is a real number greater than or equal to 1. For example, the ratio of the length of the $(N_1 - 1)^{th}$ third time unit to the length of the first sequence may be a predefined ratio.

In a third possible example, when the end mapping position (or referred to as the end time domain position) of the $n'^{th}$ first sequence may be the same as the end position in the $n'^{th}$ third time unit, the length of the $n'^{th}$ third time unit in the $N_1$ consecutive third time units and the $n'^{th}$ element in the first position relationship sequence satisfy the following formula, in other words, lengths of the $0^{th}$ third time unit to the $n'^{th}$ third time unit and the $n'^{th}$ element in the first position relationship sequence satisfy the following formula:

$$I_1(n') = \sum_{i=0}^{n'} L_i^{unit} / L_1$$

Manner (2): The length of the $n'^{th}$ third time unit in the $N_1$ consecutive third time units to the length of the first sequence satisfies an $n'^{th}$ first ratio, that is:

$$W_1(n') = L_{n'}^{unit}/L_1$$

$W_1$ (n') represents the $n'$th first ratio, $L_{n'}^{unit}$ represents the length of the $n'$th third time unit, and $L_1$ represents the length of the first sequence.

The length $L_1$ of the first sequence is usually a known value, that is, the length of the $n'$th third time unit may be determined provided that the $n'$th first ratio is determined.

Optionally, Table 4 enumerates values of the first ratio that correspond to some values of $N_1$.

Table 4

| $N_1$ | First ratio |
|---|---|
| 10 | [1, 1.5, 1, 1.5, 1, 1.5, 1, 1.5, 1, 1] |
| 12 | [1, 2, 1, 2, 1, 1, 1, 2, 1, 2, 1, 1] |
| 16 | [1, 1, 1, 2.5, 1, 1, 1, 1, 1, 1, 1, 2.5, 1, 1, 1, 1] |
| 16 | [1, 1, 1, 3.75, 1, 1, 1, 1, 1, 1, 3.75, 1, 1, 1, 1] |
| 18 | [1, 1.25, 1, 1.25, 1, 5.75, 1, 1.25, 1, 1.25, 1, 5.75, 1, 1.25, 1, 1.25, 1, 1] |
| 20 | [1, 1, 1, 2, 1, 1, 1, 2, 1, 1, 1, 2, 1, 1, 1, 2, 1, 1, 1, 1] |
| 22 | 1, 2, 1, 2, 1, 2, 1, 2, 1, 2, 1, 2, 1, 2, 1, 2, 1, 2, 1, 1] |
| 24 | [1, 1, 1, 1, 1, 1, 1, 1, 1, 1, 1, 1.25, 1, 1, 1, 1, 1, 1, 1, 1, 1, 1, 1, 1] |
| 36 | [1, 1, 1, 1, 1, 1, 1, 1, 1, 1, 1, 1, 1, 1, 1, 1, 1, 2, 1, 1, 1, 1, 1, 1, 1, 1, 1, 1, 1, 1, 1, 1, 1, 1, 1, 1] |
| 36 | [1, 1, 1, 1, 1, 1, 1, 1, 1, 1, 1, 1, 1, 1, 1, 1, 1, 2.75, 1, 1, 1, 1, 1, 1, 1, 1, 1, 1, 1, 1, 1, 1, 1, 1, 1, 1] |
| 36 | [1, 1, 1, 1, 1, 1, 1, 1, 1, 1, 1, 1, 1, 1, 1, 1, 3, 1, 1, 1, 1, 1, 1, 1, 1, 1, 1, 1, 1, 1, 1, 1, 1, 1, 1] |

For example, in the example enumerated in Table 4, when $N_1$ = 10, 0th, 2nd, 4th, 6th, 8th, and 9th first ratios are equal to 1, and it indicates that lengths of 0th, 2nd, 4th, 6th, 8th, and 9th third time units are equal to the length of the first sequence; and 1st, 3rd, 5th, and 7th first ratios are equal to 1.5, and it indicates that lengths of 1st, 3rd, 5th, and 7th third time units are 1.5 times the length of the first sequence.

Optionally, when the sending-end apparatus is a terminal device, before step S402, a network device may indicate the first ratio to the sending-end apparatus by using signaling, so that the terminal device determines the length of the third time unit, to send the first sequence. The signaling may be RRC signaling or DCI. For example, the 11 possible values of a first -ratio relationship sequence in Table 4 may be indicated by RRC signaling of four bits. For details, refer to the manner of indicating the first position relationship sequence, and the details are not described herein again.

Optionally, all possible values of the first ratio may be a part or all of the possible values in Table 4.

Optionally, when the sending-end apparatus and the receiving-end apparatus are different apparatuses, before step S402, the sending-end apparatus may indicate the first ratio to the receiving-end apparatus, so that the receiving-end apparatus determines the length of the third time unit, to receive the first sequence. For a manner of indicating the first ratio, refer to the foregoing manner of indicating the first position relationship sequence. Details are not described herein again.

In a possible implementation, when n' ≤ $N_1$ - 2, in other words, n' = 0,1, ..., or $N_1$ - 2, and the $n'$th first sequence in the $N_1$ first sequences is mapped starting from the start position in the $n'$th third time unit in the $N_1$ consecutive third time units, the $n'$th first ratio may be determined based on the first position relationship sequence.

Optionally, an $(N_1 - 1)$th first ratio may be a real number greater than or equal to 1, that is, the ratio of the length of the $(N_1 - 1)$th third time unit to the length of the first sequence is a real number greater than or equal to 1.

For example, when n' ≤ $N_1$ - 2, the first ratio and the first position relationship sequence may satisfy the following formula (6) or formula (7):

$$W_1(n') = I_1(n' + 1) - I_1(n'), \text{where } n' = 0,1, ..., \text{ or } N_1 - 2 \quad (6)$$

$$I_1(n') = \sum_{i=-1}^{n'-1} W_1(i) \quad (7)$$

$W_1(i)$ represents an $i^{th}$ first ratio, $I_1(n')$ represents the $n'^{th}$ element in the first position relationship sequence, and $W_1(-1) = 0$.

Optionally, the $N_1$ first ratios enumerated in each row in Table 4 may be determined based on the first position relationship sequence in the same row in Table 1 and the formula (6) or the formula (7). Certainly, the $N_1$ first ratios may alternatively be determined in another manner. This is not specifically limited in this application.

In another possible implementation, when the end mapping position (or referred to as the end time domain position) of the $n'^{th}$ first sequence is the same as the end position in the $n'^{th}$ third time unit, the first ratio may be determined based on the first position relationship sequence.

Optionally, the first ratio and the $n'^{th}$ element in the first position relationship sequence may satisfy the following formula (8):

$$I_1(n') = \sum_{i=0}^{n'} W_1(i) \text{ (8)}$$

$W_1(i)$ represents an $i^{th}$ first ratio, and $I_1(n')$ represents the $n'^{th}$ element in the first position relationship sequence.

Manner 2: The sending-end apparatus sequentially sends the $N_1$ first sequences in $N_1$ first time units in N consecutive time units, where N is a positive integer greater than or equal to $N_1$.

Optionally, the sending-end apparatus may send the $n'^{th}$ first sequence in the $N_1$ first sequences in an $n'^{th}$ first time unit in the $N_1$ first time units. In other words, one first sequence is sent in one first time unit, and the $N_1$ first time units one-to-one correspond to the $N_1$ first sequences.

Optionally, the sending-end apparatus may generate an $n'^{th}$ second signal based on the $n'^{th}$ first sequence in the $N_1$ first sequences (where the second signal is a continuous time domain signal), and the $n'^{th}$ second signal is sent in the $n'^{th}$ first time unit. For details, refer to the descriptions of sending the second signal in the third time unit in the foregoing manner 1, and the details are not described herein again.

Lengths (or duration) of all the $N_1$ first time units are equal. The length of the first time unit is greater than or equal to the length of the first sequence, or the duration of the first time unit is greater than or equal to duration of the second signal generated based on the first sequence.

Optionally, the $N_1$ first time units in the N consecutive time units may be consecutive or non-consecutive. This is not specifically limited in this application.

Optionally, the $n'^{th}$ first sequence in the $N_1$ first sequences is mapped starting from a start position in the $n'^{th}$ first time unit in the $N_1$ first time units. Certainly, the first sequence may alternatively be mapped starting from another position in the first time unit. For details, refer to the related descriptions of mapping the first sequence in the third time unit in the foregoing manner 1, and the details are not described herein again.

Optionally, in the manner 2, the time domain position of the first sequence may be a discrete time domain position of an element in the first sequence or a time domain position of the second signal generated based on the first sequence. For details, refer to the related descriptions of the time domain position of the first sequence in the foregoing manner 1, and the details are not described herein again.

In the manner 2, because the $N_1$ first sequences are sequentially sent in the $N_1$ first time units in the N consecutive time units, values of N and $N_1$ may be flexibly selected based on a detection requirement or a requirement for a range of the low ambiguity zone, and positions of the $N_1$ first time units in the N consecutive time units may be flexibly adjusted, to adjust or optimize the low ambiguity zone of the ambiguity function, and therefore improve the detection performance.

Optionally, because the $N_1$ first sequences are sequentially sent in the $N_1$ first time units in the N consecutive time units, the time domain position of each first sequence may be determined provided that the positions of the $N_1$ first time units in the N consecutive time units are determined.

Optionally, the positions of the $N_1$ first time units in the N consecutive time units may be represented by indexes (or numbers) of the $N_1$ first time units in the N consecutive time units. In other words, a position of a specific first time unit in the N consecutive time units may indicate a ranking of the first time unit in the N consecutive time units.

For example, the N consecutive time units may be sequentially numbered from 0 to N-1, and the $N_1$ first time units may be numbered from $0^{th}$ to $(N_1 - 1)^{th}$ first time units. It is assumed that a position that is of the $n'^{th}$ first time unit in the $N_1$ first time units and that is in the N consecutive time units is represented as $t_{loc}(n')$, N = 16, and $N_1 = 12$. In other words, 12 time units in 16 consecutive time units are used as 12 first time units. In this case, $t_{loc}(6) = 8$ may be represented as: A $6^{th}$ first time unit in the 12 first time units is an $8^{th}$ time unit in the 16 consecutive time units, in other words, the $8^{th}$ time unit in the 16 consecutive time units is a first time unit, and is the $6^{th}$ first time unit in the 12 first time units.

The following separately describes the positions of the $N_1$ first time units in the N consecutive time units in two cases in which N is equal to $N_1$ and N is greater than $N_1$.

Case 1: N is equal to $N_1$, that is, a quantity of consecutive time units is the same as a quantity of first time units.

It may be understood that, in the case 1, the N consecutive time units are the $N_1$ first time units. To be specific, a $0^{th}$

time unit in the N consecutive time units is a $0^{th}$ first time unit, and a $1^{st}$ time unit is a $1^{st}$ first time unit. By analogy, an $(N-1)^{th}$ time unit is an $(N_1 - 1)^{th}$ first time unit.

For example, using an example in which $N = N_1 = 18$, 18 first time units are time units whose indexes are 0 to 17 in 18 consecutive time units.

Optionally, in the case 1, if the length of the first time unit is equal to the length of the first sequence, or the duration of the first time unit is equal to the duration of the second signal generated based on the first sequence, the $N_1$ first sequences may be sent at the equal interval.

Alternatively, if the length of the first time unit is greater than the length of the first sequence, or the duration of the first time unit is greater than the duration of the second signal, and each first sequence is mapped starting from a same position (for example, a start position) in a corresponding first time unit, the $N_1$ first sequences may be sent at the equal interval.

For different quantities $N_1$ of first sequences, to obtain a large low ambiguity zone or achieve good detection performance, quantities N of consecutive time units and the positions of the $N_1$ first time units in the N consecutive time units may be different. When the quantity $N_1$ of first sequences is set to some values, and the quantity N of consecutive time units is equal to $N_1$, to be specific, when all the N consecutive time units are used as the first time units, the low ambiguity zone of the ambiguity function corresponding to the $N_1$ first sequences is large. Therefore, the detection performance can be improved. In addition, the values of N and $N_1$ are equal, so that detection in a scenario with a low-detection-delay requirement can be better implemented.

Case 2: N is greater than $N_1$, that is, a quantity of consecutive time units is greater than a quantity of first time units.

Optionally, when N is greater than $N_1$, each of $N_2$ time units other than the $N_1$ first time units in the N consecutive time units may be referred to as a second time unit, where $N = N_1 + N_2$. In other words, the N consecutive time units include the $N_1$ first time units and the $N_2$ second time units.

Optionally, lengths (or duration) of all the $N_2$ second time units are equal. The length of the second time unit may be the same as or different from the length of the first time unit, in other words, the duration of the second time unit may be the same as or different from the duration of the first time unit.

For example, as shown in (a) in FIG. 8a, the length (or the duration) of the first time unit is equal to the length (or the duration) of the second time unit. As shown in (b) in FIG. 8a, the length (or the duration) of the first time unit is greater than the length (or the duration) of the second time unit. As shown in (c) in FIG. 8a, the length (or the duration) of the first time unit is less than the length (or the duration) of the second time unit.

Optionally, a ratio of the length (or the duration) of the second time unit to the length (or the duration) of the first time unit may be a predefined value. Alternatively, the ratio may be indicated by the network device to the sending-end apparatus by using signaling. Alternatively, a start time domain position of the first time unit may be related to a prime factor of $N_1$ and an offset. This is described in the following embodiment, and details are not described herein.

In a first possible implementation, the $N_1$ first time units do not include a start time unit and/or an end time unit in the N consecutive time units.

In other words, the start time unit and/or the end time unit in the N consecutive time units are/is not for mapping or sending a first sequence.

Optionally, in the first possible implementation, the $N_1$ first time units may be consecutive in the N consecutive time units. Certainly, the $N_1$ first time units may alternatively be non-consecutive in the N consecutive time units.

For example, using an example in which N = 20 and $N_1 = 18$, 18 first time units may be time units numbered 2 to 19 in 20 consecutive time units, in other words, the 18 first time units are last 18 time units in the 20 consecutive time units.

In this possible implementation, because the $N_1$ first time units are consecutive in the N consecutive time units, in a scenario in which a plurality of sending-end apparatuses simultaneously send a plurality of sequences, a start position of the $N_1$ first time units in the N consecutive time units may be flexibly configured, to control interference between the sequences sent by the plurality of sending-end apparatuses. For example, a start position of $N_1$ first time units corresponding to each sending-end apparatus may be staggered from one another to control the interference. Furthermore, the second time unit may be for sending another type of data instead of the first sequence. When the plurality of sending-end apparatuses need to simultaneously send the another type of data, interference between the another type of data may also be controlled by adjusting the start position of the $N_1$ first time units.

In addition, when the sending-end apparatus needs to send the another type of data, the start position of the $N_1$ first time units may alternatively be flexibly adjusted based on a sending requirement of the data. For example, when the sending-end apparatus further needs to send high-reliability and low-latency data, the $N_2$ second time units may be configured as $N_2$ start time units in the N consecutive time units, and the $N_1$ first time units may be configured as last $N_1$ time units in the N consecutive time units.

In a second possible implementation, the $N_1$ first time units include a start time unit and an end time unit in the N consecutive time units.

In other words, the start time unit and the end time unit in the N consecutive time units are for mapping or sending a first sequence.

It may be understood that, in the second possible implementation, the $N_1$ first time units are non-consecutive in the N consecutive time units.

For example, using an example in which N = 14 and $N_1$ = 12, positions (or numbers) of 12 first time units in 14 consecutive time units are $t_{loc}$ = [0,1,2,4,5,6,7,8,9,11,12,13].

For different quantities $N_1$ of first sequences, to obtain a large low ambiguity zone or achieve good detection performance, quantities N of consecutive time units and the positions of the $N_1$ first time units in the N consecutive time units may be different. When the quantity $N_1$ of first sequences is set to some values, and the quantity N of consecutive time units is greater than $N_1$, the low ambiguity zone of the ambiguity function corresponding to the $N_1$ first sequences is large. Therefore, in the case 2, the quantity N of consecutive time units and the positions of the first time units in the N consecutive time units may be flexibly adjusted based on the quantity $N_1$ of first sequences, to improve the detection performance.

For example, Table 5 enumerates possible positions provided in this application that are of the first time units in the consecutive time units when N and $N_1$ are set to some values.

Table 5

| N | $N_1$ | $t_{loc}$ |
|----|----|----|
| 12 | 10 | [0, 1, 2, 3, 5, 6, 8, 9, 10, 11] |
| 13 | 12 | [0, 1, 2, 4, 5, 6, 7, 8, 9, 10, 11, 12] |
| 14 | 12 | [0, 1, 2, 4, 5, 6, 7, 8, 9, 11, 12, 13] |
| 15 | 14 | [0, 1, 2, 3, 5, 6, 7, 8, 9, 10, 11, 12, 13, 14] |
| 16 | 14 | [0, 1, 2, 4, 5, 7, 8, 9, 10, 11, 12, 13, 14, 15] |
| 19 | 18 | [0, 1, 2, 3, 4, 5, 6, 7, 8, 10, 11, 12, 13, 14, 15, 16, 17, 18] |

Optionally, when the sending-end apparatus is a terminal device, before step S402, a network device may indicate the positions of the $N_1$ first time units in the N consecutive time units to the sending-end apparatus by using signaling. The signaling may be RRC signaling or DCI. For example, six possible values of the positions in Table 5 may be indicated by RRC signaling of three bits. For example, eight possible values in eight possible values of the three bits may one-to-one correspond to the six possible values that are of the positions and that are enumerated in Table 5. The network device may send a specific value of the three bits to the sending-end apparatus. In this case, the positions that are of the $N_1$ first time units and that are indicated by the network device are positions corresponding to the value.

For example, Table 6 enumerates other possible positions provided in this application that are of the first time units in the consecutive time units when N and $N_1$ are set to some values.

Table 6

| N | $N_1$ | $t_{loc}$ |
|----|----|----|
| 11 | 10 | [0, 1, 2, 4, 5, 6, 7, 8, 9, 10] |
| 12 | 10 | [0, 1, 3, 5, 6, 7, 8, 9, 10, 11] |
| 12 | 10 | [0, 1, 2, 3, 4, 5, 6, 8, 10, 11] |
| 15 | 14 | [0, 1, 2, 3, 4, 5, 6, 8, 9, 10, 11, 12, 13, 14] |
| 16 | 14 | [0, 1, 3, 5, 6, 7, 8, 9, 10, 11, 12, 13, 14, 15] |
| 16 | 14 | [0, 1, 2, 4, 5, 6, 8, 9, 10, 11, 12, 13, 14, 15] |
| 16 | 14 | [0, 1, 2, 3, 4, 5, 6, 7, 9, 10, 11, 13, 14, 15] |
| 17 | 16 | [0, 1, 3, 4, 5, 6, 7, 8, 9, 10, 11, 12, 13, 14, 15, 16] |
| 17 | 16 | [0, 1, 2, 3, 4, 5, 6, 7, 8, 9, 10, 11, 12, 13, 15, 16] |
| 18 | 16 | [0, 1, 2, 4, 5, 6, 7, 8, 9, 10, 11, 12, 13, 15, 16, 17] |

Optionally, when the sending-end apparatus is a terminal device, before step S402, a network device may indicate the positions of the $N_1$ first time units in the N consecutive time units to the sending-end apparatus by using signaling. The signaling may be RRC signaling or DCI. For example, the 10 possible values of the positions in Table 6 may be indicated by RRC signaling of four bits. For details, refer to the related descriptions of Table 5, and the details are not described herein again.

Optionally, all possible values of the positions of the $N_1$ first time units in the N consecutive time units may be a part or all of the possible values in Table 5 or Table 6.

Optionally, when the sending-end apparatus and the receiving-end apparatus are different apparatuses, before step S402, the sending-end apparatus may indicate $t_{loc}$ to the receiving-end apparatus, so that the receiving-end apparatus determines the first time units, to receive the first sequences. For example, $t_{loc}$ enumerated in Table 5 or Table 6 may be preconfigured (or stored) in the sending-end apparatus and the receiving-end apparatus, and the sending-end apparatus may indicate a specific value of $t_{loc}$ in Table 5 or Table 6 by using signaling of three bits or four bits. For details, refer to the foregoing related descriptions of indicating the first position relationship sequence by the network device to the terminal device, and the details are not described herein again.

Optionally, a quantity of values of N enumerated in Table 5 or Table 6 may be increased, and the value of $N_1$ and the positions $t_{loc}$ of the first time units remain unchanged, to obtain a position design of the first time units in another value combination of N and $N_1$.

Alternatively, a quantity of values of N enumerated in Table 5 or Table 6 may be increased, the value of $N_1$ remains unchanged, and the positions of the first time units are added to a specific positive integer, to obtain another position design of the first time units in another value combination of N and $N_1$. In this case, the $N_1$ first time units do not include the start time unit in the N consecutive time units. This may be understood as the position design of the first time units in the first possible implementation in the foregoing case 2.

Optionally, the positions of the $N_1$ first time units in the N consecutive time units may also be understood as a first position relationship sequence, in other words, each value of $t_{loc}$ enumerated in Table 5 or Table 6 may also be referred to as a first position relationship sequence. However, because the lengths of the first time units are equal, all elements in the first position relationship sequence are integers.

Optionally, the positions of the $N_1$ first time units in the N consecutive time units may be determined in the following two manners:

Manner (1): The positions of the $N_1$ first time units in the N consecutive time units may be determined based on positions of the $N_1$ first sequences in N sequences.

For example, the sending-end apparatus may further determine $N_2$ second sequences in addition to the $N_1$ first sequences, and the $N_1$ first sequences and the $N_2$ second sequences form the N sequences. The indexes (or positions) of the $N_1$ first time units in the N consecutive time units may be the same as indexes (or the positions) of the $N_1$ first sequences in the N sequences.

Optionally, elements in each of the $N_2$ second sequences are the same. For example, the elements in all the second sequences are 0, or the elements in all the second sequence are a same non-zero value.

Optionally, lengths of all the $N_2$ second sequences are the same. The length of the second sequence may be represented as $L_2$, where $L_2$ is a positive integer.

Optionally, an $n''^{th}$ second sequence in the $N_2$ second sequences is determined based on an $n''^{th}$ second base sequence in $N_2$ second base sequences, where $n'' = 0, 1, ...,$ or $N_2 - 1$. For example, each element in each second base sequence may be 0, or may be a same non-zero value. An example in which each element in each second base sequence is equal to 0 is used for description in the following embodiment of this application.

Optionally, the $N_2$ second base sequences and the $N_1$ first base sequences may form N base sequences.

In a possible implementation, a start sequence in the N sequences is a sequence in the $N_2$ second sequences, and/or an end sequence in the N sequences is a sequence in the $N_2$ second sequences. In this case, the $N_1$ first time units do not include the start time unit and/or the end time unit in the N consecutive time units.

In another possible implementation, a start sequence in the N sequences is a sequence in the $N_1$ first sequences, and an end sequence in the N sequences is a sequence in the $N_1$ first sequences. In this case, the $N_1$ first time units include the start time unit and the end time unit in the N consecutive time units.

Manner (2): Start positions of the $N_1$ first time units may be related to the prime factor of $N_1$ and the offset.

In the manner (2), the length of the first time unit is equal to the length of the first sequence, and the duration of the first time unit is equal to the duration of the second signal generated based on the first sequence. Therefore, the start positions of the $N_1$ first time units are start positions of the $N_1$ first sequences, and a relationship between the start positions of the $N_1$ first time units, the prime factor of $N_1$, and the offset is the same as the foregoing relationship between the start positions of the $N_1$ first sequences, the prime factor of $N_1$, and the offset. For details, refer to the foregoing related descriptions, and the details are not described herein again.

Optionally, the start positions of the $N_1$ first time units may be determined based on the relationship between the start positions of the $N_1$ first sequences, the prime factor of $N_1$, and the offset, and then the first time units may be determined with reference to the length of the first sequence. Further, if there is a time interval between the $n'^{th}$ first time unit and an $(n' + 1)^{th}$ $(n' \leq N_1 - 2)$ first time unit, a time interval between an end position of the $n'^{th}$ first time unit and a start position of the $(n' + 1)^{th}$ first time unit is one second time unit, and a length of the second time unit is equal to the time interval.

For example, the value of the first position relationship sequence may be obtained according to the formula (3).

The $n'^{th}$ element $I_1(n')$ in the first position relationship sequence is a relative start position of the $n'^{th}$ first time unit in the $N_1$ first time units, namely, a ratio of the start position of the $n'^{th}$ first time unit in the $N_1$ first time units to the length of the first sequence.

When n' = 0,1, ..., or $N_1$ - 2, if a difference between $I_1(n' + 1)$ and $I_1(n')$ is greater than 1, it indicates that the time interval between the $(n' + 1)^{th}$ first time unit and the $n'^{th}$ first time unit is greater than the length of the first sequence (or the time interval between the $(n' + 1)^{th}$ first time unit and the $(n')^{th}$ first time unit is greater than the duration of the second signal). In other words, there is one second time unit between the $(n' + 1)^{th}$ first time unit and the $(n')^{th}$ first time unit, and a length of the second time unit is a product of a result of $I_1(n' + 1) - I_1(n') - 1$ and the length of the first sequence. A position of the second time unit is between the $(n' + 1)^{th}$ first time unit and the $n'^{th}$ first time unit.

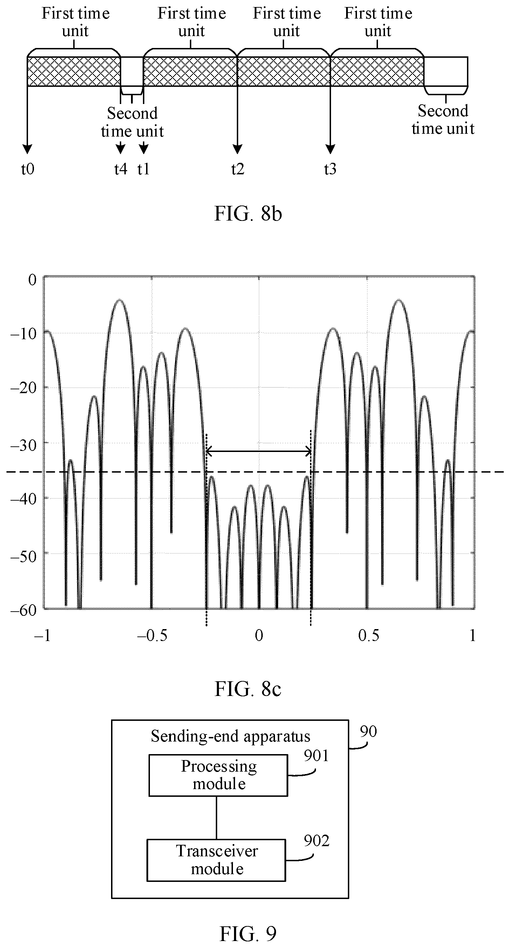

For example, as shown in FIG. 8b, assuming that start positions that are of four first time units and that are determined based on the relationship between the start positions of the $N_1$ first sequences, the prime factor of $N_1$, and the offset are respectively t0, t1, t2, and t3, a time interval (t4 to t1) between an end position (denoted as t4) of a $0^{th}$ first time unit and a start position of a $1^{st}$ first time unit is one second time unit, and duration of the second time unit is t1 minus t4.

Optionally, if a last time unit in the N consecutive time units is a second time unit, a length (or duration) of the second time unit may be predefined. This is not specifically limited in this application.

The foregoing describes the time domain positions for sending the $N_1$ first sequences. The following describes the $N_1$ first base sequences for determining the $N_1$ first sequences and positions of the $N_1$ first base sequences in the N base sequences.

Optionally, the $N_1$ first base sequences correspond to a first extension sequence $s_{ext,1}$. The first extension sequence includes $N_1$ elements, and an $n'^{th}$ element is denoted as $s_{ext,1}(n')$. When the $n'^{th}$ element in the first extension sequence is a first value, the $n'^{th}$ first base sequence in the $N_1$ first base sequences is the sequence x in the GCP; or when the $n'^{th}$ element in the first extension sequence is a second value, the $n'^{th}$ first base sequence in the $N_1$ first base sequences is the sequence y in the GCP, where $n'$ = 0,1, ..., or $N_1$ - 1.

In other words, the $N_1$ first base sequences one-to-one correspond to the $N_1$ elements in the first extension sequence, and the $N_1$ first base sequences may be determined provided that values of the $N_1$ elements in the first extension sequence are determined.

It should be noted that an extension sequence in embodiments of this application may also be referred to as an encoding sequence or an extension function, and the three names may be used interchangeably.

The first value and the second value are two different values. For example, the first value and the second value may be respectively 1 and -1, or may be respectively -1 and 1. Certainly, the first value and the second value may alternatively be other values. For example, the first value and the second value are respectively 1 and 5.

For example, using an example in which the first value is represented as A, and the second value is represented as B, when N=18, if the first extension sequence is $s_{ext,1}$ = [A,B,B,A,A,B,A,B,B,A,A,B,A,B,B,A,A,B] , the $N_1$ first base sequences are {x,y,y, x, x, y, x, y, y, x, x, y, x, y, y, x, x, y}. When the first value and the second value are respectively 1 and -1, the first extension sequence is $s_{ext,1}$ = [1, -1, -1, 1, 1, -1, 1, -1, -1, 1, 1, -1, 1, -1, -1, 1, 1, -1].

Optionally, the $N_2$ second base sequences correspond to a second extension sequence $s_{ext,2}$ . The second extension sequence includes $N_2$ elements, and an $n''^{th}$ element is denoted as $s_{ext,2}(n'')$, where n" = 0,1, ..., or $N_2$ - 1. Each element in the second extension sequence may be a third value, and the third value may be, for example, 0, or may be a non-zero value. The first value, the second value, and the third value are three different values.

Optionally, the $N_1$ elements in the first extension sequence and the $N_2$ elements in the second extension sequence may form an extension sequence, and the extension sequence includes N elements. The extension sequence corresponds to the N base sequences including the $N_1$ first base sequences and the $N_2$ second base sequences.

For example, when an $n^{th}$ element in the extension sequence is the first value, an $n^{th}$ base sequence in the N base sequences is the sequence x in the GCP. Alternatively, when an $n^{th}$ element in the extension sequence is the second value, an $n^{th}$ base sequence in the N base sequences is the sequence y in the GCP. Alternatively, when an $n^{th}$ element in the extension sequence is the third value, an $n^{th}$ base sequence in the N base sequences is a zero sequence (that is, all elements in the sequence are 0), where n = 0,1, ..., or $N$ - 1.

Optionally, a sum of a quantity of elements whose values are the first value and a quantity of elements whose values are the second value in the extension sequence is the quantity $N_1$ of first base sequences and of first sequences, and a sum of a quantity of elements whose values are the third value is the $N_2$ quantity of second base sequences and of second sequences. In addition, positions (or numbers) that are of elements whose values are the first value and the second value in the extension sequence and that are in the extension sequence are the positions (or numbers) of the $N_1$ first base sequences in the N base sequences, and are also the positions of the $N_1$ first sequences in the N sequences. Positions (or numbers) that are of elements whose values are the third value in the extension sequence and that are in the extension sequence are positions (or numbers) of the $N_2$ second base sequences in the N base sequences, and are also positions of the $N_2$ second sequences in the N sequences.

For example, Table 7 enumerates some possible implementations of the extension sequence that are provided in this application when N is greater than $N_1$ and N and $N_1$ are set to some values. An example in which the first value and the second value are respectively 1 and -1 and the third value is equal to 0 is used in Table 7 for description.

Table 7

| N | $N_1$ | $N_2$ | Extension sequence |
|---|---|---|---|
| 12 | 10 | 2 | [1, -1, -1, 1, 0, 1, -1, 0, -1, 1, 1, -1] |
| 13 | 12 | 1 | [1, -1, -1, 0, 1, 1, -1, -1, 1, 1, -1, -1, 1] |
| 14 | 12 | 2 | [1, -1, -1, 0, 1, 1, -1, 1, -1, -1, 0, 1, 1, -1] |
| 15 | 14 | 1 | [1, -1, -1, 1, 0, 1, -1, -1, 1, 1, -1, -1, 1, 1, -1] |
| 16 | 14 | 2 | [1, -1, -1, 0, 1, 1, 0, -1, -1, 1, 1, -1, -1, 1, 1, -1] |
| 19 | 18 | 1 | [1, -1, -1, 1, 1, -1, -1, 1, 1, 0, -1, -1, 1, 1, -1, -1, 1, 1, -1] |

Optionally, for each row in Table 7, a sequence obtained by sequentially sorting non-zero elements (namely, 1 and -1) in the extension sequence may be a first extension sequence, and a sequence obtained by sequentially sorting elements whose values are 0 in the extension sequence may be a second extension sequence. For example, using an example that is in Table 7 and in which N = 12, $N_1$ = 10, and $N_2$ = 2, the extension sequence is [1, -1, -1, 1, 0, 1, -1, 0, -1, 1, 1, -1], a first extension sequence included in the extension sequence is [1, -1, -1, 1, 1, -1, -1, 1, 1, -1], and a second extension sequence is [0, 0].

Optionally, because the positions (or numbers) that are of the elements whose values are the first value and the second value in the extension sequence and that are in the extension sequence are the positions (or numbers) of the $N_1$ first base sequences in the N base sequences, are the positions of the $N_1$ first sequences in the N sequences, and are also the positions of the $N_1$ first time units in the N consecutive time units, the positions enumerated in Table 5 that are of the first time units in the consecutive time units may be determined based on the extension sequence enumerated in Table 7.

Optionally, only N and the extension sequence may be reserved in each row in Table 7, and $N_1$ and $N_2$ do not exist.

Optionally, each extension sequence or a sequence set or a base sequence set corresponding to each extension sequence may correspond to one threshold. For example, the sequence set includes N sequences, and the base sequence set includes N base sequences, where the N sequences include the $N_1$ first sequences and the $N_2$ second sequences, and the N base sequences include the $N_1$ first base sequences and the $N_2$ second base sequences. In a low ambiguity zone of an ambiguity function corresponding to a specific extension sequence or a sequence set or a base sequence set corresponding to the extension sequence, a value of the ambiguity function is less than or equal to a threshold corresponding to the extension sequence, the sequence set, or the base sequence set. For example, the threshold may be -35 dB, -45 dB, -50 dB, -55 dB, or -60 dB. The threshold may be referred to as a low ambiguity zone threshold.

Optionally, the extension sequence or the sequence set or the base sequence set corresponding to the extension sequence may be designed based on the threshold corresponding to the extension sequence, the sequence set, or the base sequence set. For example, a threshold is given, and an extension sequence, a sequence set, or a base sequence set corresponding to the threshold may be determined based on the threshold. In a low ambiguity zone of an ambiguity function corresponding to the extension sequence, the sequence set, or the base sequence set that is designed based on the threshold, a value of the ambiguity function is less than or equal to the threshold.

For example, low ambiguity zone thresholds corresponding to the extension sequences enumerated in Table 7 from top to bottom are respectively -40 dB, -35 dB, -35 dB, -40 dB, -35 dB, and -40 dB.

For example, Table 8 enumerates some possible implementations of the first extension sequence that are provided in this application when N is equal to $N_1$, to be specific, when the second sequence, the second base sequence, and the second extension sequence do not exist, and when N (or $N_1$) is set to some values. An example in which the first value and the second value are respectively 1 and -1 is used in Table 8 for description.

Table 8

| $N_1$ | First extension sequence |
|---|---|
| 14 | [1, -1, -1, 1, 1, -1, -1, 1, 1, -1, 1, -1, -1, 1] |
| 14 | [1, -1, -1, 1, -1, 1, 1, -1, -1, 1, 1, -1, -1, 1] |
| 18 | [1, -1, -1, 1, 1, -1, -1, 1, 1, -1, -1, 1, 1, -1, 1, -1, -1, 1] |
| 18 | [1, -1, -1, 1, -1, 1, 1, -1, -1, 1, 1, -1, -1, 1, 1, -1, -1, 1] |
| 22 | [1, -1, -1, 1, 1, -1, -1, 1, 1, -1, 1, -1, -1, 1, -1, 1, 1, -1, 1, -1, -1, 1] |

(continued)

| $N_1$ | First extension sequence |
|---|---|
| 22 | [1, -1, -1, 1, -1, 1, 1, -1, 1, -1, -1, 1, -1, 1, 1, -1, -1, 1, 1, -1, -1, 1] |
| 24 | [1, -1, -1, 1, 1, -1, -1, 1, 1, -1, 1, -1, -1, 1, 1, -1, -1, 1, 1, -1, 1, -1, -1, 1] |
| 24 | [1, -1, -1, 1, -1, 1, 1, -1, -1, 1, 1, -1, -1, 1, -1, 1, 1, -1, -1, 1, 1, -1, -1, 1] |

For example, low ambiguity zone thresholds corresponding to the extension sequences enumerated in Table 8 from top to bottom are respectively -35 dB, -35 dB, -40 dB, -40 dB, -40 dB, -40 dB, -40 dB, and -40 dB.

Optionally, each extension sequence in Table 8 is a predefined sequence. Each extension sequence in Table 8 may be obtained through search.

For example, Table 9a enumerates some other possible implementations of the extension sequence that are provided in this application when N is greater than $N_1$ and N and $N_1$ are set to some values. An example in which the first value and the second value are respectively 1 and -1 and the third value is equal to 0 is used in Table 9a for description.

Table 9a

| N | $N_1$ | $N_2$ | Extension sequence |
|---|---|---|---|
| 11 | 10 | 1 | [1, -1, -1, 0, 1, 1, -1, 1, -1, -1, 1] |
| 12 | 10 | 2 | [1, -1, 0, -1, 0, 1, 1, -1, 1, -1, -1, 1] |
| 12 | 10 | 2 | [1, -1, -1, 1, -1, 1, 1, 0, -1, 0, -1, 1] |
| 15 | 14 | 1 | [1, -1, -1, 1, -1, 1, 1, 0, -1, -1, 1, -1, 1, 1, -1] |
| 16 | 14 | 2 | [1, -1, 0, -1, 0, 1, 1, -1, 1, -1, -1, 1, -1, 1, 1, -1] |
| 16 | 14 | 2 | [1, -1, -1, 0, 1, 1, -1, 0, 1, -1, -1, 1, -1, 1, 1, -1] |
| 16 | 14 | 2 | [1, -1, -1, 1, -1, 1, 1, -1, 0, 1, -1, -1, 0, 1, 1, -1] |
| 17 | 16 | 1 | [1, -1, 0, -1, 1, 1, -1, 1, -1, -1, 1, 1, -1, -1, 1, 1, -1] |
| 17 | 16 | 1 | [1, -1, -1, 1, 1, -1, -1, 1, 1, -1, 1, -1, -1, 1, 0, 1, -1] |
| 18 | 16 | 2 | [1, -1, -1, 0, 1, 1, -1, 1, -1, -1, 1, -1, 1, 1, 0, -1, -1, 1] |

For example, low ambiguity zone thresholds corresponding to the extension sequences enumerated in Table 9a from top to bottom are respectively -40 dB, -40 dB, -40 dB, -35 dB, -35 dB, -40 dB, -40 dB, -35 dB, -35 dB, and -35 dB.

Optionally, for each row in Table 9a, a sequence obtained by sequentially sorting non-zero elements (namely, 1 and -1) in the extension sequence may be a first extension sequence, and a sequence obtained by sequentially sorting elements whose values are 0 in the extension sequence may be a second extension sequence. For example, a first extension sequence corresponding to each row in Table 9a may be enumerated in Table 9b.

Table 9b

| N | $N_1$ | $N_2$ | First extension sequence |
|---|---|---|---|
| 11 | 10 | 1 | [1, -1, -1, 1, 1, -1, 1, -1, -1, 1] |
| 12 | 10 | 2 | [1, -1, -1, 1, 1, -1, 1, -1, -1, 1] |
| 12 | 10 | 2 | [1, -1, -1, 1, -1, 1, 1, -1, -1, 1] |
| 15 | 14 | 1 | [1, -1, -1, 1, -1, 1, 1, -1, -1, 1, -1, 1, 1, -1] |
| 16 | 14 | 2 | [1, -1, -1, 1, 1, -1, 1, -1, -1, 1,-1, 1, 1, -1] |
| 16 | 14 | 2 | [1, -1, -1, 1, 1, -1, 1, -1, -1, 1,-1, 1, 1, -1] |
| 16 | 14 | 2 | [1, -1, -1, 1, -1, 1, 1, -1, 1, -1, -1, 1, 1, -1] |
| 17 | 16 | 1 | [1, -1, -1, 1, 1, -1, 1, -1, -1, 1, 1, -1, -1, 1, 1, -1] |
| 17 | 16 | 1 | [1, -1, -1, 1, 1, -1, -1, 1, 1, -1, 1, -1, -1, 1, 1, -1] |

(continued)

| N | $N_1$ | $N_2$ | First extension sequence |
|---|---|---|---|
| 18 | 16 | 2 | [1, -1, -1, 1, 1, -1, 1, -1, -1, 1, -1, 1, 1, -1, -1, 1] |

Optionally, each extension sequence in Table 9a or Table 9b is a predefined sequence. Each extension sequence in Table 9a or Table 9b may be obtained through search.

Optionally, only N and the extension sequence may be reserved in each row in Table 9a or Table 9b, and $N_1$ and $N_2$ do not exist.

Optionally, because the positions (or numbers) that are of the elements whose values are the first value and the second value in the extension sequence and that are in the extension sequence are the positions (or numbers) of the $N_1$ first base sequences in the N base sequences, are the positions of the $N_1$ first sequences in the N sequences, and are also the positions of the $N_1$ first time units in the N consecutive time units, the positions enumerated in Table 6 that are of the first time units in the consecutive time units may be determined based on the extension sequence enumerated in Table 9a. The positions $t_{loc}$ of the first time units in each row in Table 6 in the consecutive time units correspond to the extension sequence or the first extension sequence in the same row in Table 9a or Table 9b.

Optionally, when the sending-end apparatus is a terminal device, before step S402, a network device may indicate the extension sequence to the sending-end apparatus by using signaling, so that the terminal device determines the $N_1$ first sequences and the positions of the $N_1$ first time units in the N consecutive time units. The signaling may be RRC signaling or DCI. For example, the extension sequence in Table 7 or Table 8 may be indicated by RRC signaling of three bits, and the extension sequence in Table 9a may be indicated by RRC signaling of four bits. For details, refer to the related descriptions of Table 5, and the details are not described herein again.

Optionally, all possible values of the extension sequence may be a part or all of the possible values in Table 7, Table 8, or Table 9a.

Optionally, a quantity of values of N that are enumerated in Table 7, Table 8, or Table 9a may be increased, the value of $N_1$ remains unchanged, and at least one 0 is added to a start position and/or an end position in the extension sequence shown in Table 7, Table 8, or Table 9a, to obtain a new extension sequence. In this case, the start sequence in the N sequences is a sequence in the $N_2$ second sequences, and/or the end sequence in the N sequences is a sequence in the $N_2$ second sequences. The $N_1$ first time units do not include the start time unit and/or the end time unit in the N consecutive time units.

It may be understood that the extension sequence enumerated in Table 7, Table 8, or Table 9a may be transformed into an extension sequence that is obtained when the first value, the second value, or the third value is another value. For example, 1 in Table 7, Table 8, or Table 9a may be changed to another value of the first value. Correspondingly, -1 in Table 7, Table 8, or Table 9a is changed to another value of the second value, and 0 in Table 7, Table 8, or Table 9a is changed to another value of the third value.

For whether a value of the $n$'th element in the first extension sequence is the first value or the second value:
In a first possible implementation, whether the value of the $n$'th element in the first extension sequence is the first value or the second value may be determined in a structured manner. Optionally, the first extension sequence is related to the prime factor of $N_1$.

For example, the $n$'th element (or the value of the $n$'th element) in the first extension sequence is related to $\prod_{m=0}^{M-1}(c_m)^{b_m} \cdot b_m$ satisfies $n = \sum_{m=0}^{M-1}(b_m \times \prod_{i=-1}^{m-1} a_i)$; and $a_{-1} = 1$, $b_m = 0,1, ...,$ or $a_m - 1$, $c_m$ is equal to 1 or -1, $m = 0,1, ...,$ or $M - 1$, and n' = 0,1, ..., or $N_1 - 1$.

Based on the foregoing relationship, $b_0, b_1, ..., b_{M-1}$ may be obtained by using the factor sequence $a$ and an index n. In addition, a value of an $n$th element is obtained based on $b_0, b_1, ..., b_{M-1}$ and $c_0, c_1, ..., c_{M-1}$ (namely, $c_m$). $b_0, b_1, ..., b_{M-1}$ may be represented as a sequence $b$, in other words, $b = [b_0, b_1, ..., b_{M-1}]$. $c_0, c_1, ..., c_{M-1}$ may be represented as a sequence $c$, in other words, $c = [c_0, c_1, ..., c_{M-1}]$. Therefore, values in the first extension sequence may be determined provided that values in the factor sequence $a$ and the sequence c are determined.

Optionally, a 1st element in the factor sequence $a$ may be an even number. In this case, a low ambiguity zone of an ambiguity function corresponding to the first extension sequence is near a Doppler shift 0 (that is, the Doppler shift is equal to 0), and the $N_1$ first sequences may be for detecting a target object that is still or that moves at a low speed. Certainly, the 1st element in the factor sequence $a$ may alternatively be an odd number. In this case, the low ambiguity zone of the ambiguity function corresponding to the first extension sequence is near a specific Doppler shift greater than 0, and the $N_1$ first sequences may be for detecting a target object whose moving speed is within a specific speed range (where a smallest speed in the speed range is greater than 0).

Optionally, a value of a 1st element in the sequence c may be -1.

For example, Table 10 enumerates values provided in this application that are of the factor sequence $a$ and the sequence c when N is set to some values.

Table 10

| N | $N_1$ | $N_2$ | Factor sequence $a$ | Sequence $c$ |
|---|---|---|---|---|
| 12 | 10 | 2 | [2, 5] | [-1, -1] |
| 13 | 12 | 1 | [2, 3, 2] | [-1, -1, -1] |
| 14 | 12 | 2 | [2, 3, 2] | [-1, -1, 1] |
| 15 | 14 | 1 | [2, 7] | [-1, -1] |
| 16 | 14 | 2 | [2, 7] | [-1, -1] |
| 19 | 18 | 1 | [2, 3, 3] | [-1, -1, -1] |

Optionally, the first extension sequence in the extension sequence enumerated in each row in Table 7 may be determined based on the factor sequence $a$ and the sequence c in the corresponding row in Table 10 and the foregoing formula related to the first extension sequence. Certainly, the first extension sequence may alternatively be determined in another manner. This is not specifically limited in this application.

Optionally, the first extension sequence in the extension sequence enumerated in the corresponding row in Table 7 may be determined based on the factor sequence $a$ and the sequence c enumerated in each row in Table 10. In other words, the first extension sequence corresponding to the $N_1$ first sequences may be determined based on the factor sequence $a$ and the sequence c in Table 10. In addition, $t_{loc}$ in the corresponding row in Table 5 may be determined based on the extension sequence enumerated in each row in Table 7, and the positions of the first time units in the consecutive time units may be determined based on $t_{loc}$ in Table 5. In other words, $t_{loc}$ in each row in Table 5 corresponds to the factor sequence $a$ and the sequence c in the corresponding row in Table 10. For example, the positions of the first time units in the consecutive time units may be determined based on $t_{loc}$ in a $g^{th}$ row in Table 5, and the first extension sequence may be determined based on the factor sequence $a$ and the sequence c in a $g^{th}$ row in Table 10, to determine the $N_1$ first base sequences corresponding to the $N_1$ first sequences.

Optionally, only N, the factor sequence $a$, and the sequence c may be reserved in each row in Table 10, and $N_1$ and $N_2$ do not exist.

Optionally, when the factor sequence $a$ is enumerated in Table 3, a sequence c and a first extension sequence that correspond to the factor sequence $a$ may be enumerated in Table 11.

Table 11

| $N_1$ | Factor sequence $a$ | Sequence $c$ | First extension sequence |
|---|---|---|---|
| 10 | [2, 5] | [-1, -1] | [1, -1, -1, 1, 1, -1, -1, 1, 1, -1] |
| 12 | [2, 3, 2] | [-1, -1, -1] | [1, -1, -1, 1, 1, -1, -1, 1, 1, -1, -1, 1] |
| 16 | [2, 2, 2, 2] | [-1, -1, 1, 1] | [1, -1, -1, 1, 1, -1, -1, 1, 1, -1, -1, 1, 1, -1, -1, 1] |
| 16 | [2, 2, 2, 2] | [-1, -1, 1, 1] | [1, -1, -1, 1, 1, -1, -1, 1, 1, -1, -1, 1, 1, -1, -1, 1] |
| 18 | [2, 3, 3] | [-1, -1, 1] | [1, -1, -1, 1, 1, -1, 1, -1, -1, 1, 1, -1, 1, -1, -1, 1, 1, -1] |
| 20 | [2, 2, 5] | [-1, -1, -1] | [1, -1, -1, 1, -1, 1, 1, -1, 1, -1, -1, 1, -1, 1, 1, -1, 1, -1, -1, 1] |
| 22 | [2, 11] | [-1, -1] | [1, -1, -1, 1, 1, -1, -1, 1, 1, -1, -1, 1, 1, -1, -1, 1, 1, -1, -1, 1, 1, - 1] |
| 24 | [2, 3, 2, 2] | [-1, -1, 1, 1] | [1, -1, -1, 1, 1, -1, 1, -1, -1, 1, 1, -1, 1, -1, -1, 1, 1, -1, 1, -1, -1, 1, 1, -1] |
| 36 | [2, 3, 3, 2] | [-1, -1, 1, 1] | [1, -1, -1, 1, 1, -1, 1, -1, -1, 1, 1, -1, 1, -1, -1, 1, 1, -1, 1, -1, -1, 1, 1, -1, 1, -1, -1, 1, 1, -1, 1, -1, -1, 1, 1, -1] |
| 36 | [2, 3, 3, 2] | [-1, -1, 1, 1] | [1, -1, -1, 1, 1, -1, 1, -1, -1, 1, 1, -1, 1, -1, -1, 1, 1, -1, 1, -1, -1, 1, 1, -1, 1, -1, -1, 1, 1, -1, 1, -1, -1, 1, 1, -1] |
| 36 | [2, 3, 3, 2] | [-1, -1, 1, 1] | [1, -1, -1, 1, 1, -1, 1, -1, -1, 1, 1, -1, 1, -1, -1, 1, 1, -1, 1, -1, -1, 1, 1, -1, 1, -1, -1, 1, 1, -1, 1, -1, -1, 1, 1, -1] |

Optionally, the time domain position of each first sequence in the $N_1$ first sequences may be determined based on the first position relationship sequence in Table 1, and the first extension sequence corresponding to the $N_1$ first sequences may be determined based on Table 11. In other words, the first position relationship sequence in each row in Table 1 corresponds to the first extension sequence in the corresponding row in Table 11. For example, the time domain position of each first sequence in the $N_1$ first sequences may be determined based on a first position relationship sequence in a $g^{th}$ row in Table 1, and the $N_1$ first base sequences corresponding to the $N_1$ first sequences are determined based on a first extension sequence in the $g^{th}$ row in Table 11.

Optionally, the first position relationship sequence may be determined based on a row in Table 3, so that the time domain position of each first sequence in the $N_1$ first sequences may be determined, and the first extension sequence corresponding to the $N_1$ first sequences may be determined based on Table 11. In other words, the first position relationship sequence determined based on each row in Table 3 corresponds to the first extension sequence in the corresponding row in Table 11. For example, the time domain position of each first sequence in the $N_1$ first sequences may be determined based on a first position relationship sequence determined based on a $g^{th}$ row in Table 3, and the $N_1$ first base sequences corresponding to the $N_1$ first sequences are determined based on a first extension sequence in the $g^{th}$ row in Table 11.

Optionally, the lengths of the $N_1$ third time units corresponding to the $N_1$ first sequences may be determined based on the first ratios in Table 4, and the first extension sequence corresponding to the $N_1$ first sequences may be determined based on Table 11. In other words, the first ratios in each row in Table 4 correspond to the first extension sequence in the corresponding row in Table 11. For example, the lengths of the $N_1$ third time units may be determined based on first ratios in a $g^{th}$ row in Table 4, and the $N_1$ first base sequences corresponding to the $N_1$ first sequences are determined based on a first extension sequence in the $g^{th}$ row in Table 11.

For example, using an example in which $N_1$ is equal to 24, the first position relationship sequence is the first position relationship sequence when $N_1 = 24$ in Table 1, and the first extension sequence is the first extension sequence when $N_1 = 24$ in Table 11, a spectral function that is of the first extension sequence and that is obtained according to the formula (2-B) is shown in FIG. 8c. A vertical coordinate is energy (or a value) of the spectral function, and is in a unit of dB. A horizontal coordinate is $2v/N_1$, where $-N_1/2 \le v \le N_1/2$, and v is a real number.

For example, the threshold is -35 dB. It can be learned from FIG. 8c that a zone in which energy of the spectral function is less than or equal to -35 dB exists near a value of the horizontal coordinate being 0, in other words, a low ambiguity zone exists near the value of the horizontal coordinate being 0. It can be learned from FIG. 8c and FIG. 1b that, compared with the solution in which the plurality of sequences are determined based on the PTM sequence, the solution in this application can be applied to generate a larger low ambiguity zone, to improve the detection performance. In addition, in comparison with the PTM solution corresponding to FIG. 1b, a quantity of sent sequences may be reduced while the detection performance is improved (where a quantity of sequences in the PTM solution corresponding to FIG. 1b is 32, and a quantity of sequences that corresponds to FIG. 8c is 24), to save resources. When the horizontal coordinate is 0, it indicates that a value of v is 0. v being 0 indicates that a moving speed of a target is 0, in other words, the target is still.

It may be understood that, in FIG. 8c, the low ambiguity zone generated according to the solution of this application is described merely by using the example in which $N_1$ is equal to 24, the first position relationship sequence is the first position relationship sequence when $N_1 = 24$ in Table 1, and the first extension sequence is the first extension sequence when $N_1 = 24$ in Table 11. For the first extension sequences and the first position relationship sequences in the other rows in Table 1 and Table 11, for a same low ambiguity zone threshold and approximate quantities of sequences (where for example, the quantity of sequences in the PTM solution is a power of 2, and the quantity of sequences is a minimum value not less than $N_1$), a larger low ambiguity zone may be generated in comparison with the PTM solution (or a smaller quantity of sequences may be sent to generate a low ambiguity zone in a similar size in the solution of this application in comparison with the PTM solution). In addition, for various extension sequences, first extension sequences, positions of the first time units, first ratios, and the like that are provided in the other tables in this embodiment of this application, when a same low ambiguity zone threshold and approximate quantities of sequences are used, a larger low ambiguity zone may be generated in comparison with the PTM solution, or a smaller quantity of sequences may be sent to generate a low ambiguity zone in a similar size in the solution of this application in comparison with the PTM solution.

Optionally, only $N_1$ and the first extension sequence may be reserved in each row in Table 11, and the factor sequence *a* and the sequence c do not exist.

Optionally, that the $n'^{th}$ element $s_{ext,1}(n')$ in the first extension sequence is related to $\prod_{m=0}^{M-1}(c_m)^{b_m}$ may include:

$$s_{ext,1}(n') = \prod_{m=0}^{M-1}(c_m)^{b_m}$$

In this scenario, one of the first value and the second value is 1, and the other is -1.

Alternatively, that the $n'^{th}$ element $s_{ext,1}(n')$ in the first extension sequence is related to $\prod_{m=0}^{M-1}(c_m)^{b_m}$ may include:

$$s_{ext,1}(n') = C - D \prod_{m=0}^{M-1} (c_m)^{b_m}$$

$C$ and $D$ are real numbers. $C$ and $D$ may be the same. For example, both $C$ and $D$ are equal to 1/2. In this case, one of the first value and the second value is 0, and the other is 1. Alternatively, $C$ and $D$ may be different. This is not specifically limited in this application.

In a second possible implementation, whether the value of the $n'$th element in the first extension sequence is the first value or the second value may be obtained through search. To be specific, the first extension sequence, the second extension sequence, the extension sequence, and the position that is of the element in the first extension sequence and that is in the extension sequence may be obtained through search.

For example, the extension sequence enumerated in Table 8 or Table 9a, the first extension sequence in the extension sequence, or the like may be obtained through search. Certainly, the extension sequence enumerated in Table 8 or Table 9a may alternatively be obtained in another manner. This is not specifically limited in this application.

In the foregoing solution, the $n'$th first sequence in the $N_1$ first sequences is determined based on the $n'$th first base sequence in the $N_1$ first base sequences. The following describes a relationship between the $n'$th first sequence and the $n'$th first base sequence. Optionally, the $n'$th first sequence and the $n'$th first base sequence satisfy one of the following four relationships:

Relationship 1: The $n'$th first sequence is the same as the $n'$th first base sequence.

For example, if the $n'$th first base sequence is the sequence x in the GCP, the $n'$th first sequence is also the sequence x in the GCP. If the $n'$th first base sequence is the sequence y in the GCP, the $n'$th first sequence is also the sequence y in the GCP. In addition, in this scenario, the length of the first sequence is the same as a length of the first base sequence.

Relationship 2: The $n'$th first sequence is formed by concatenating the $n'$th first base sequence and at least one 0.

It may be understood that, in this scenario, the length $L_1$ of the first sequence is greater than a length $L_{base,1}$ of the first base sequence. A quantity of 0s in the first sequence is $L_1 - L_{base,1}$.

Optionally, the at least one 0 may be concatenated at a start position and/or an end position in the $n'$th first base sequence to obtain the $n'$th first sequence. For example, the at least one 0 is concatenated at the end position in the first base sequence. When the first base sequence is the sequence x or the sequence y in the GCP, the first sequence may be separately represented by the following formulas:

$$s_{tx,1}^{n'}(i) = \begin{cases} x(i) & , i = 0,1,\dots,L_{base,1}-1 \\ 0 & , i = L_{base,1}, L_{base,1}+1, \dots, L_1 - 1 \end{cases}$$

$$s_{tx,1}^{n'}(i) = \begin{cases} y(i) & , i = 0,1,\dots,L_{base,1}-1 \\ 0 & , i = L_{base,1}, L_{base,1}+1, \dots, L_1 - 1 \end{cases}$$

$s_{tx,1}^{n'}(i)$ represents an $i$th element in the $n'$th first sequence. x(i) represents an $i$th element in the sequence x in GCP. y(i) represents an $i$th element in the sequence y in GCP.

Relationship 3: The $n'$th first sequence is obtained by performing cyclic extension on the $n'$th first base sequence.

Optionally, in this scenario, the length $L_1$ of the first sequence may be greater than a length $L_{base,1}$ of the first base sequence.

Optionally, an $i$th element in the $n'$th first sequence and an $i$th element in the $n'$th first base sequence may satisfy the following relationship:

$$s_{tx,1}^{n'}(i) = s_{base,1}^{n'}\big[(i+\Delta) \bmod L_{base,1}\big], \text{where } i = 0,1,\dots, \text{or } L_1 - 1$$

$s_{tx,1}^{n'}(i)$ represents the $i$th element in the $n'$th first sequence, $s_{base,1}^{n'}$ represents the $i$th element in the $n'$th first base sequence, $\Delta$ represents an offset of the cyclic extension, mod represents a modulo operation, $L_{base,1}$ is the length of the first base sequence, and $L_1$ is the length of the first sequence.

It may be understood that, both $s_{base,1}^{n'}(i)$ and $s_{base,1}^{n'}[i]$ represent the $i$th element in the $n'$th first base sequence. In other words, in this embodiment of this application, both A(n) and A[n] may represent an $n$th element in a sequence A.

For example, using an example in which $\Delta = 2$ and $L_{base,1} = 128$, when $i = 0$, a $0$th element $s_{tx,1}^{n'}(0)$ in the $n'$th

first sequence= $s_{base,1}^{n'}[(2) \bmod 128] = s_{base,1}^{n'}(2)$, that is, the 0th element in the $n'$th first sequence is equal to a 2nd element in the $n'$th first base sequence. When $i = 1$, a 1st element $s_{tx,1}^{n'}(1)$ in the $n'$th

first sequence= $s_{base,1}^{n'}[(3) \bmod 128] = s_{base,1}^{n'}(3)$, that is, the 1th element in the $n'$th first sequence is equal to a 3rd element in the $n'$th first base sequence. By analogy, all elements in the $n'$th first sequence may be obtained.

Relationship 4: The $n'$th first sequence is formed by concatenating at least one 0 and a result obtained by performing cyclic extension on the $n'$th first base sequence.

For the cyclic extension on the first base sequence, refer to the descriptions in the relationship 3; and for the concatenation of the first base sequence and the at least one 0, refer to the descriptions in the relationship 2. Details are not described herein again.

It may be understood that, in the foregoing embodiments, methods and/or steps implemented by the sending-end apparatus may alternatively be implemented by a component (for example, a processor, a chip, a chip system, a circuit, a logical module, or software such as a chip or a circuit) that may be used in the sending-end apparatus. Methods and/or steps implemented by the receiving-end apparatus may alternatively be implemented by a component (for example, a processor, a chip, a chip system, a circuit, a logical module, or software such as a chip or a circuit) that may be used in the receiving-end apparatus.

The foregoing mainly describes the solutions provided in this application from the perspective of interaction between devices. Correspondingly, this application further provides a communication apparatus, and the communication apparatus is configured to implement the foregoing methods. The communication apparatus may be the sending-end apparatus in the foregoing method embodiments, an apparatus including the foregoing sending-end apparatus, or a component that may be used in the sending-end apparatus. Alternatively, the communication apparatus may be the receiving-end apparatus in the foregoing method embodiments, an apparatus including the receiving-end apparatus, or a component that may be used in the receiving-end apparatus.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. During actual implementation, another division manner may be used.

In an implementation scenario, an example in which the communication apparatus is the sending-end apparatus in the foregoing method embodiments is used. FIG. 9 is a diagram of a structure of a sending-end apparatus 90. The sending-end apparatus 90 includes a processing module 901 and a transceiver module 902.

In some embodiments, the sending-end apparatus 90 may further include a storage module (not shown in FIG. 9), configured to store program instructions and data.

In some embodiments, the transceiver module 902 may also be referred to as a transceiver unit, and is configured to implement a sending function and/or a receiving function. The transceiver module 902 may include a transceiver circuit, a transceiver machine, a transceiver, or a communication interface.

In some embodiments, the transceiver module 902 may include a receiving module and a sending module, respectively configured to perform receiving and sending steps performed by the sending-end apparatus in the foregoing method embodiments, and/or configured to support another process of the technology described in this specification. The processing module 901 may be configured to perform processing (for example, determining and generation) steps performed by the sending-end apparatus in the foregoing method embodiments, and/or configured to support another process of the technology described in this specification.

The processing module 901 is configured to determine $N_1$ first sequences, where an $n'$th first sequence in the $N_1$ first sequences is determined based on an $n'$th first base sequence in $N_1$ first base sequences, n' = 0,1, ...,$N_1$ - 1, and each of the first base sequences is a sequence in a Golay complementary pair GCP.

The transceiver module 902 is configured to sequentially send the $N_1$ first sequences. An equal time interval exists between time domain positions of any two adjacent first sequences in the $N_1$ first sequences, and the $N_1$ first base sequences satisfy at least one of the following: the $N_1$ first base sequences are related to a prime factor of $N_1$, or the $N_1$ first

base sequences are predefined sequences. Alternatively, at least an integer p and an integer q exist, and a time interval between a time domain position of a $p^{th}$ first sequence in the $N_1$ first sequences and a time domain position of an adjacent sequence of the $p^{th}$ first sequence is different from a time interval between a time domain position of a $q^{th}$ first sequence in the $N_1$ first sequences and a time domain position of an adjacent sequence of the $q^{th}$ first sequence, where p and q are greater than or equal to 0 and less than or equal to $N_1$ - 1.

Optionally, the transceiver module 902 is specifically configured to send the $n'^{th}$ first sequence in the $N_1$ first sequences in a $n'^{th}$ third time unit in $N_1$ consecutive third time units, where a length of each of the third time units is greater than or equal to a length of the first sequence, and lengths of at least two third time units in the $N_1$ consecutive third time units are not equal.

Optionally, the transceiver module 902 is specifically configured to sequentially send the $N_1$ first sequences in $N_1$ first time units in N consecutive time units, where N is a positive integer greater than or equal to $N_1$, lengths of all the $N_1$ first time units are equal, and the length of the first time unit is greater than or equal to a length of the first sequence.

Optionally, the processing module 901 is further configured to determine $N_2$ second sequences, where elements in each of the second sequences are the same, $N_2$ is a nonnegative integer, and $N = N_1 + N_2$. The $N_2$ second sequences and the $N_1$ first sequences form N sequences, and indexes of the $N_1$ first sequences in the N sequences are the same as indexes of the $N_1$ first time units in the N consecutive time units.

In this application, the sending-end apparatus 90 is presented in a form of functional modules obtained through integrated division. The module herein may be a specific ASIC, a circuit, a processor that executes one or more software or firmware programs and a memory, an integrated logic circuit, and/or another component capable of providing the foregoing functions.

In some embodiments, for hardware implementation, a person skilled in the art may figure out that the sending-end apparatus 90 may be in a form of the communication apparatus 30 shown in FIG. 3.

In an example, functions/implementation processes of the processing module 901 in FIG. 9 may be implemented by the processor 301 in the communication apparatus 30 shown in FIG. 3 by invoking the computer-executable instructions stored in the memory 303. Functions/implementation processes of the transceiver module 902 in FIG. 9 may be implemented by the communication interface 304 in the communication apparatus 30 shown in FIG. 3.

In some embodiments, when the sending-end apparatus 90 in FIG. 9 is a chip or a chip system, functions/implementation processes of the transceiver module 902 may be implemented by an input/output interface (or a communication interface) of the chip or the chip system, and functions/implementation processes of the processing module 901 may be implemented by a processor (or a processing circuit) of the chip or the chip system.

Because the sending-end apparatus 90 provided in this embodiment may perform the foregoing method, for technical effects that can be achieved by the sending-end apparatus 90, refer to the foregoing method embodiments. Details are not described herein again.

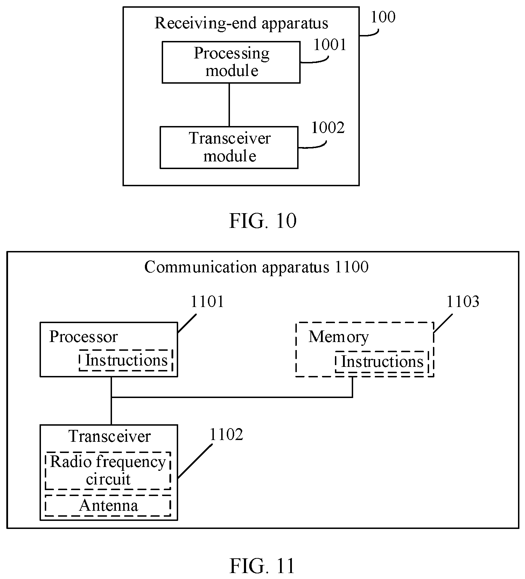

In another implementation scenario, an example in which the communication apparatus is the receiving-end apparatus in the foregoing method embodiments is used. FIG. 10 is a diagram of a structure of a receiving-end apparatus 100. The receiving-end apparatus 100 includes a processing module 1001 and a transceiver module 1002.

In some embodiments, the receiving-end apparatus 100 may further include a storage module (not shown in FIG. 10), configured to store program instructions and data.

In some embodiments, the transceiver module 1002 may also be referred to as a transceiver unit, and is configured to implement a sending function and/or a receiving function. The transceiver module 1002 may include a transceiver circuit, a transceiver machine, a transceiver, or a communication interface.

In some embodiments, the transceiver module 1002 may include a receiving module and a sending module, respectively configured to perform receiving and sending steps performed by the receiving-end apparatus in the foregoing method embodiments, and/or configured to support another process of the technology described in this specification. The processing module 1001 may be configured to perform processing (for example, determining and generation) steps performed by the receiving-end apparatus in the foregoing method embodiments, and/or configured to support another process of the technology described in this specification.

The transceiver module 1002 is configured to receive a first signal, where the first signal is a signal obtained through transmission of $N_1$ first sequences, an $n'^{th}$ first sequence in the $N_1$ first sequences is determined based on an $n'^{th}$ first base sequence in $N_1$ first base sequences, n' = 0,1, ..., $N_1$ - 1, and each of the first base sequences is a sequence in a Golay complementary pair GCP.

The processing module 1001 is configured to process the first signal based on the $N_1$ first sequences or the $N_1$ first base sequences. An equal time interval exists between time domain positions of any two adjacent first sequences in the $N_1$ first sequences, and the $N_1$ first base sequences satisfy at least one of the following: the $N_1$ first base sequences are related to a prime factor of $N_1$, or the $N_1$ first base sequences are predefined sequences. Alternatively, at least an integer p and an integer q exist, and a time interval between a time domain position of a $p^{th}$ first sequence in the $N_1$ first sequences and a time domain position of an adjacent sequence of the $p^{th}$ first sequence is different from a time interval between a time domain position of a $q^{th}$ first sequence in the $N_1$ first sequences and a time domain position of an adjacent sequence of the

$q^{th}$ first sequence, where p and q are greater than or equal to 0 and less than or equal to $N_1$ - 1.

In this application, the receiving-end apparatus 100 is presented in a form of functional modules obtained through integrated division. The module herein may be a specific ASIC, a circuit, a processor that executes one or more software or firmware programs and a memory, an integrated logic circuit, and/or another component capable of providing the foregoing functions.

In some embodiments, for hardware implementation, a person skilled in the art may figure out that the receiving-end apparatus 100 may be in a form of the communication apparatus 30 shown in FIG. 3.

In an example, functions/implementation processes of the processing module 1001 in FIG. 10 may be implemented by the processor 301 in the communication apparatus 30 shown in FIG. 3 by invoking the computer-executable instructions stored in the memory 303. Functions/implementation processes of the transceiver module 1002 in FIG. 10 may be implemented by the communication interface 304 in the communication apparatus 30 shown in FIG. 3.

In some embodiments, when the receiving-end apparatus 100 in FIG. 10 is a chip or a chip system, functions/implementation processes of the transceiver module 1002 may be implemented by an input/output interface (or a communication interface) of the chip or the chip system, and functions/implementation processes of the processing module 1001 may be implemented by a processor (or a processing circuit) of the chip or the chip system.

Because the receiving-end apparatus 100 provided in this embodiment may perform the foregoing method, for technical effects that can be achieved by the receiving-end apparatus 100, refer to the foregoing method embodiments. Details are not described herein again.

In a possible product form, the sending-end apparatus and the receiving-end apparatus in embodiments of this application may alternatively be implemented by the following: one or more field programmable gate arrays (field programmable gate arrays, FPGAs), a programmable logic device (programmable logic device, PLD), a controller, a state machine, a gate logic, a discrete hardware component, any other appropriate circuit, or any combination of circuits that can perform various functions described in this application.

In another possible product form, the sending-end apparatus or the receiving-end apparatus in embodiments of this application may be implemented by a general bus architecture. For ease of description, FIG. 11 is a diagram of a structure of a communication apparatus 1100 according to an embodiment of this application. The communication apparatus 1100 includes a processor 1101 and a transceiver 1102. The communication apparatus 1100 may be a sending-end apparatus, or a chip or a module in the sending-end apparatus. Alternatively, the communication apparatus 1100 may be a receiving-end apparatus, or a chip or a module in the receiving-end apparatus. FIG. 11 shows only main components of the communication apparatus 1100. The communication apparatus may further include a memory 1103 in addition to the processor 1101 and the transceiver 1102.

Optionally, the processor 1101 is mainly configured to: process a communication protocol and communication data, control the entire communication apparatus, execute a software program, and process data of the software program. The memory 1103 is mainly configured to store the software program and data. The transceiver 1102 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave.

Optionally, the processor 1101, the transceiver 1102, and the memory 1103 may be connected through a communication bus.

After the communication apparatus is powered on, the processor 1101 may read the software program in the memory 1103, interpret and execute instructions of the software program, and process data of the software program. When data needs to be sent in a wireless manner, the processor 1101 performs baseband processing on the to-be-sent data, and then outputs a baseband signal to a radio frequency circuit. The radio frequency circuit performs radio frequency processing on the baseband signal, and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1101. The processor 1101 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, an embodiment of this application further provides a communication apparatus. The communication apparatus includes a processor, configured to implement the method in any one of the foregoing method embodiments. The communication apparatus may be the sending-end apparatus or the receiving-end apparatus in the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the memory may be not in the communication apparatus.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separated, this is, may be located together in a same place or distributed on a plurality of network units. A component displayed as a unit may be or may be not a physical unit. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by software, hardware, firmware, or any combination thereof. When a software program is for implementing embodiments, all or some of the embodiments may be implemented in a form of a computer program product. The computer program product includes one or more computer instructions. When the computer program instructions are loaded and executed on a computer, all or some of the procedures (or functions) described in embodiments of this application are implemented. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as having covered any and all of modifications, variations, combinations, or equivalents within the scope of this application. It is clear that a person skilled in the art can make various modifications and variations to this application without departing from the spirit and scope of this application. In this way, if the modifications and variations made to this application fall within the scope of the claims of this application and their equivalent technologies, this application is intended to include these modifications and variations.

**Claims**

1. A sequence transmission method, wherein the method comprises:

   determining $N_1$ first sequences, wherein an $n'^{th}$ first sequence in the $N_1$ first sequences is determined based on an $n'^{th}$ first base sequence in $N_1$ first base sequences, n' = 0,1, ..., $N_1$ - 1, and each of the first base sequences is a sequence in a Golay complementary pair GCP; and
   sequentially sending the $N_1$ first sequences, wherein
   an equal time interval exists between time domain positions of any two adjacent first sequences in the $N_1$ first sequences, and the $N_1$ first base sequences satisfy at least one of the following: the $N_1$ first base sequences are related to a prime factor of $N_1$, or the $N_1$ first base sequences are predefined sequences;
   or
   at least an integer p and an integer q exist, and a time interval between a time domain position of a $p^{th}$ first sequence in the $N_1$ first sequences and a time domain position of an adjacent sequence of the $p^{th}$ first sequence is different from a time interval between a time domain position of a $q^{th}$ first sequence in the $N_1$ first sequences and a time domain position of an adjacent sequence of the $q^{th}$ first sequence, wherein p and q are greater than or equal to 0 and less than or equal to $N_1$ - 1.

2. The method according to claim **1,** wherein when at least the integer p and the integer q exist, a time domain position of each first sequence in the $N_1$ first sequences is related to the prime factor of $N_1$.

3. The method according to claim 2, wherein
   the time domain position of each first sequence in the $N_1$ first sequences is related to the prime factor of $N_1$ and an offset.

4. The method according to claim 2 or 3, wherein lengths of all the $N_1$ first sequences are the same; and
   a ratio of a start time domain position of the $n'^{th}$ first sequence in the $N_1$ first sequences to the length of the first sequence is an $n'^{th}$ element in a first position relationship sequence, and the $n'^{th}$ element $I_1$ (n') in the first position relationship sequence satisfies:

   $$I_1(n') = n' + \sum_{m=0}^{M-1}(b_m \times d_m)$$

   wherein $b_m$ satisfies $n' = \sum_{m=0}^{M-1}(b_m \times \prod_{i=-1}^{m-1} a_i)$, $a_{-1} = 1$, and $b_m = 0,1, ...,$ or $a_m$ - 1; $N_1 = \prod_{m=0}^{M-1} a_m$, $a_m$ is the prime factor of $N_1$, m = 0,1, ... , M - 1, and M is a positive integer greater than 1; and $d_m$ is the offset, and $d_m$ is a real number greater than or equal to 0.

5. The method according to claim 4, wherein sequentially sending the $N_1$ first sequences comprises:
   sending the $n'^{th}$ first sequence in the $N_1$ first sequences in an $n'^{th}$ third time unit in $N_1$ consecutive third time units, wherein a length of each of the third time units is greater than or equal to the length of the first sequence, and lengths of at least two third time units in the $N_1$ consecutive third time units are not equal.

6. The method according to claim 5, wherein the $n'^{th}$ first sequence in the $N_1$ first sequences is mapped starting from a start position in the $n'^{th}$ third time unit in the $N_1$ consecutive third time units.

7. The method according to claim 5 or 6, wherein when n' = 0,1, ..., $N_1$ - 2, a length of an $(n' - 1)^{th}$ third time unit in the $N_1$ consecutive third time units and the $n'^{th}$ element in the first position relationship sequence satisfy:

$$I_1(n') = \sum_{i=-1}^{n'-1} L_i^{unit}/L_1$$

wherein $L_i^{unit}$ represents a length of an $i^{th}$ third time unit, $L_{-1}^{unit} = 0$, and $L_1$ represents the length of the first sequence; and
a ratio of a length of an $(N_1 - 1)^{th}$ third time unit to the length of the first sequence is a real number greater than or equal to 1.

8. The method according to claim 1, wherein when $N_1$ is a fourth value, the $N_1$ first base sequences are related to the prime factor of $N_1$; or when $N_1$ is a fifth value, the $N_1$ first base sequences are the predefined sequences.

9. The method according to any one of claims 1 to 4 or 8, wherein sequentially sending the $N_1$ first sequences comprises: sequentially sending the $N_1$ first sequences in $N_1$ first time units in N consecutive time units, wherein N is a positive integer greater than or equal to $N_1$, lengths of all the $N_1$ first time units are equal, and the length of the first time unit is greater than or equal to the length of the first sequence.

10. The method according to claim 9, wherein the method further comprises: determining $N_2$ second sequences, wherein elements in each of the second sequences are the same, $N_2$ is a nonnegative integer, and $N = N_1 + N_2$, wherein the $N_2$ second sequences and the $N_1$ first sequences form N sequences, and indexes of the $N_1$ first sequences in the N sequences are the same as indexes of the $N_1$ first time units in the N consecutive time units.

11. The method according to claim 10, wherein N is a positive integer greater than $N_1$, a start sequence in the N sequences is a sequence in the $N_1$ first sequences, and an end sequence in the N sequences is a sequence in the $N_1$ first sequences.

12. The method according to any one of claims 9 to 11, wherein N is a positive integer greater than $N_1$, and the $N_1$ first time units comprise a start time unit and an end time unit in the $N$ consecutive time units.

13. The method according to any one of claims 9 to 12, wherein the lengths of the $N_1$ first time units are different from a length of a second time unit, and the second time unit is any time unit other than the $N_1$ first time units in the N consecutive time units.

14. The method according to any one of claims 1 to 13, wherein

   the $N_1$ first base sequences correspond to a first extension sequence, wherein
   when an $n'^{th}$ element in the first extension sequence is a first value, the $n'^{th}$ first base sequence in the $N_1$ first base sequences is a sequence x in the GCP; or when an $n'^{th}$ element in the first extension sequence is a second value, the $n'^{th}$ first base sequence in the $N_1$ first base sequences is a sequence y in the GCP.

15. The method according to claim 14, wherein

   the $n'^{th}$ element in the first extension sequence is related to $\prod_{m=0}^{M-1}(c_m)^{b_m}$, and $b_m$ satisfies

   $n' = \sum_{m=0}^{M-1}(b_m \times \prod_{i=-1}^{m-1} a_i)$; and $a_{-1} = 1$, $b_m = 0,1, ..., a_m - 1$, $N_1 = \prod_{m=0}^{M-1} a_m$, $a_m$ is the prime factor of $N_1$, m = 0,1, ..., $M$ - 1, M is a positive integer greater than 1, and $c_m$ is equal to 1 or -1.

16. The method according to claim 15, wherein the $n'^{th}$ element in the first extension sequence satisfies at least one of the following:

$$s_{ext,1}(n') = \prod_{m=0}^{M-1}(c_m)^{b_m}$$

$$s_{ext,1}(n') = \frac{1}{2} - \frac{1}{2}\prod_{m=0}^{M-1}(c_m)^{b_m}$$

wherein $s_{ext,1}(n')$ represents the $n'$th element in the first extension sequence.

**17.** The method according to any one of claims 1 to 16, wherein the $n'$th first sequence and the $n'$th first base sequence satisfy one of the following:

the $n'$th first sequence is the same as the $n'$th first base sequence;
the $n'$th first sequence is formed by concatenating the $n'$th first base sequence and at least one 0;
the $n'$th first sequence is obtained by performing cyclic extension on the $n'$th first base sequence; or
the $n'$th first sequence is formed by concatenating at least one 0 and a result obtained by performing cyclic extension on the $n'$th first base sequence.

**18.** A sequence processing method, wherein the method comprises:

receiving a first signal, wherein the first signal is a signal obtained through transmission of $N_1$ first sequences, an $n'$th first sequence in the $N_1$ first sequences is determined based on an $n'$th first base sequence in $N_1$ first base sequences, $n' = 0, 1, ..., N_1 - 1$, and each of the first base sequences is a sequence in a Golay complementary pair GCP; and
processing the first signal based on the $N_1$ first sequences or the $N_1$ first base sequences, wherein
an equal time interval exists between time domain positions of any two adjacent first sequences in the $N_1$ first sequences, and the $N_1$ first base sequences satisfy at least one of the following: the $N_1$ first base sequences are related to a prime factor of $N_1$, or the $N_1$ first base sequences are predefined sequences;
or
at least an integer p and an integer q exist, and a time interval between a time domain position of a p$^{th}$ first sequence in the $N_1$ first sequences and a time domain position of an adjacent sequence of the p$^{th}$ first sequence is different from a time interval between a time domain position of a q$^{th}$ first sequence in the $N_1$ first sequences and a time domain position of an adjacent sequence of the q$^{th}$ first sequence, wherein p and q are greater than or equal to 0 and less than or equal to $N_1 - 1$.

**19.** The method according to claim 18, wherein when at least the integer p and the integer q exist, a time domain position of each first sequence in the $N_1$ first sequences is related to the prime factor of $N_1$.

**20.** The method according to claim 19, wherein lengths of all the $N_1$ first sequences are the same; and
a ratio of a start time domain position of the $n'$th first sequence in the $N_1$ first sequences to the length of the first sequence is an $n'$th element in a first position relationship sequence, and the $n'$th element $I_1$ (n') in the first position relationship sequence satisfies:

$$I_1(n') = n' + \sum_{m=0}^{M-1}(b_m \times d_m)$$

wherein $b_m$ satisfies $n' = \sum_{m=0}^{M-1}(b_m \times \prod_{i=-1}^{m-1} a_i)$, $a_{-1} = 1$, and $b_m = 0, 1, ..., or\, a_m - 1$; $N_1 = \prod_{m=0}^{M-1} a_m$, $a_m$ is the prime factor of $N_1$, m = 0, 1, ..., M - 1, and is a positive integer greater than 1; and $d_m$ is a real number greater than or equal to 0.

**21.** The method according to claim 20, wherein the $n'$th first sequence in the $N_1$ first sequences is mapped to an $n'$th third time unit in $N_1$ consecutive third time units, a length of each of the third time units is greater than or equal to the length of the first sequence, and lengths of at least two third time units in the $N_1$ consecutive third time units are not equal.

**22.** The method according to claim 21, wherein the $n'$th first sequence in the $N_1$ first sequences is mapped starting from a start position in the $n'$th third time unit in the $N_1$ consecutive third time units.

**23.** The method according to claim 21 or 22, wherein when $n' = 0, 1, ..., N_1 - 2$, a length of an $(n' - 1)^{th}$ third time unit in the $N_1$ consecutive third time units and an $(n' - 1)^{th}$ element in the first position relationship sequence satisfy:

$$I_1(n') = \sum_{i=-1}^{n'-1} L_i^{unit} / L_1$$

wherein $L_i^{unit}$ represents a length of an $i$th third time unit, $L_{-1}^{unit} = 0$, and $L_1$ represents the length of the first sequence; and

a ratio of a length of an $(N_1 - 1)$th third time unit to the length of the first sequence is a real number greater than or equal to 1.

24. The method according to any one of claims 18 to 20, wherein the $n'$th first sequence in the $N_1$ first sequences is mapped to $N_1$ first time units in N consecutive time units, lengths of all the $N_1$ first time units are equal, and the length of the first time unit is greater than or equal to the length of the first sequence.

25. The method according to claim 24, wherein N is a positive integer greater than $N_1$, and the $N_1$ first time units comprise a start time unit and an end time unit in the N consecutive time units.

26. The method according to claim 24 or 25, wherein the lengths of the $N_1$ first time units are different from a length of a second time unit, and the second time unit is any time unit other than the $N_1$ first time units in the N consecutive time units.

27. A communication apparatus, comprising a module or a unit configured to perform the method according to any one of claims 1 to 17, or comprising a module or a unit configured to perform the method according to any one of claims 18 to 26.

28. A communication apparatus, wherein the communication apparatus comprises a processor, and the processor is configured to enable, by running a computer program or instructions or by using a logic circuit, the communication apparatus to perform the method according to any one of claims 1 to 17 or the method according to any one of claims 18 to 26.

29. A computer-readable storage medium, wherein the computer-readable storage medium stores computer instructions or a program; and when the computer instructions or the program is run on a computer, the method according to any one of claims 1 to 17 or the method according to any one of claims 18 to 26 is performed.

30. A computer program product, wherein the computer program product comprises computer instructions; and when a part or all of the computer instructions are run, the method according to any one of claims 1 to 17 or the method according to any one of claims 18 to 26 is performed.

31. A communication system, wherein the communication system comprises a sending-end apparatus and a receiving-end apparatus, wherein the sending-end apparatus is configured to perform the method according to any one of claims 1 to 17, and the receiving-end apparatus is configured to perform the method according to any one of claims 18 to 26.

(a)

(b)

FIG. 1a

FIG. 1b

FIG. 1c

Sending-end apparatus ◄──► Receiving-end apparatus

FIG. 2

30

Processor — 301
CPU 0
CPU 1

Memory — 303

Communication bus 302

Communication interface — 304
Output device — 305
Input device — 306

FIG. 3

Sending-end apparatus

Receiving-end apparatus

S401: Determine $N_1$ first sequences, where an $n'^{\text{th}}$ first sequence is determined based on an $n'^{\text{th}}$ first base sequence, and the first base sequence is a sequence in a GCP

S402: The sending-end apparatus sends the $N_1$ first sequences (where the $N_1$ first sequences are sent in time domain at an equal interval or at unequal intervals), and the receiving-end apparatus receives a first signal (a signal obtained through transmission of the $N_1$ first sequences)

S403: Process the first signal based on the $N_1$ first sequences or $N_1$ first base sequences

FIG. 4

Time domain resources
occupied by a first sequence

t1    t3    t2  Time

FIG. 5

Third time  Third time  Third time  Third time
unit     unit     unit     unit

(a)

Third time   Third time   Third time   Third time
unit      unit      unit      unit

(b)

First
sequence or
second signal

FIG. 6

Third time   Third time  Third time   Third time
unit      unit    unit     unit

First
sequence or
second signal

FIG. 7

(a)

(b)

(c)

First time unit

Second time unit

FIG. 8a

First time unit  First time unit  First time unit  First time unit

Second time unit

Second time unit

t0          t4  t1          t2          t3

FIG. 8b

FIG. 8c

Sending-end apparatus 90

Processing module 901

Transceiver module 902

FIG. 9

Receiving-end apparatus ⌇ 100

Processing module ⌇ 1001

Transceiver module ⌇ 1002

FIG. 10

Communication apparatus 1100

Processor ⌇ 1101
Instructions

Memory ⌇ 1103
Instructions

Transceiver ⌇ 1102
Radio frequency circuit
Antenna

FIG. 11

# EP 4 622 369 A1

## INTERNATIONAL SEARCH REPORT

| | International application No. |
|---|---|
| | **PCT/CN2022/138828** |

**A. CLASSIFICATION OF SUBJECT MATTER**

H04W72/0446(2023.01)i; H04W28/18(2009.01)i

According to International Patent Classification (IPC) or to both national classification and IPC

**B. FIELDS SEARCHED**

Minimum documentation searched (classification system followed by classification symbols)

IPC:H04W72/-,H04W28/-,H04L5/-,H04L27/-

Documentation searched other than minimum documentation to the extent that such documents are included in the fields searched

Electronic data base consulted during the international search (name of data base and, where practicable, search terms used)

CNTXT, WPABSC, ENTXTC, CNKI: 序列, 时域, 周期, 间隔, GCP, 格雷互补, 模糊函数; VEN, WPABS, ENTXT, 3GPP: sequence, time, interval, period, GCP, golay complementary pair, fuzzy function

**C. DOCUMENTS CONSIDERED TO BE RELEVANT**

| Category* | Citation of document, with indication, where appropriate, of the relevant passages | Relevant to claim No. |
|---|---|---|
| A | CN 114503487 A (HUAWEI TECHNOLOGIES CO., LTD.) 13 May 2022 (2022-05-13)<br>entire document | 1-31 |
| A | CN 114916009 A (HUAWEI TECHNOLOGIES CO., LTD.) 16 August 2022 (2022-08-16)<br>entire document | 1-31 |
| A | CN 108811522 A (MEDIATEK INC.) 13 November 2018 (2018-11-13)<br>entire document | 1-31 |
| A | US 9793964 B1 (INTEL CORP.) 17 October 2017 (2017-10-17)<br>entire document | 1-31 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 August 2023** | **30 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/138828**

| Patent document cited in search report | | | Publication date (day/month/year) | Patent family member(s) | | | Publication date (day/month/year) |
|---|---|---|---|---|---|---|---|
| CN | 114503487 | A | 13 May 2022 | CN | 114503487 | B | 16 June 2023 |
| | | | | WO | 2021062872 | A1 | 08 April 2021 |
| CN | 114916009 | A | 16 August 2022 | WO | 2022171021 | A1 | 18 August 2022 |
| CN | 108811522 | A | 13 November 2018 | TW | 201840156 | A | 01 November 2018 |
| | | | | US | 2018254885 | A1 | 06 September 2018 |
| | | | | US | 10530565 | B2 | 07 January 2020 |
| | | | | EP | 3590300 | A1 | 08 January 2020 |
| | | | | EP | 3590300 | A4 | 08 April 2020 |
| | | | | WO | 2018157864 | A1 | 07 September 2018 |
| | | | | IN | 201927039754 | A | 02 October 2020 |
| | | | | CN | 108811522 | B | 29 April 2022 |
| | | | | TW | 672033 | B1 | 11 September 2019 |
| US | 9793964 | B1 | 17 October 2017 | US | 2017324453 | A1 | 09 November 2017 |
| | | | | WO | 2017192236 | A1 | 09 November 2017 |

Form PCT/ISA/210 (patent family annex) (July 2022)